# EUROPEAN PATENT APPLICATION

(11) **EP 4 299 682 A1**
(43) Date of publication of application: **03.01.2024**
(21) Application number: 22315132.5
(22) Date of filing: 30.06.2022
(51) Int. Cl.: C09D 5/08, C09D 5/18, C09D 7/61, C09D 127/04, C09D 163/00, C08K 3/26

(54) **WATER-BASED COATING COMPOSITION FOR HEAT RESISTANT PROTECTIVE COATINGS**

(71) Applicant: PPG Industries Ohio, Inc., Cleveland, OH 44111 (US)
(72) Inventor: Achard, Marion Anaïs, 69100 Villeurbanne (FR)
(74) Representative: f & e patent

(57) **Abstract**

The present disclosure relates to water-based coating compositions useful for forming protective coatings on substrates. The water-based coating compositions comprise an aqueous carrier, a binder component comprising at least one chlorinated resin, a filler component comprising at least one carbonate type filler, and at least one anti-corrosion agent, wherein (A) the binder component further comprises at least one epoxy-functional resin in an amount corresponding to a weight ratio of the at least one epoxy-functional resin to the at least one chlorinated resin of at least 0.1, and the composition has a filler to binder ratio on a weight basis of 1.0 or more, or (B) the composition has a filler to binder ratio on a weight basis of 2.0 or more. The present disclosure also relates to coatings, coating methods, coated articles and uses, derivable or making use of the water-based coating compositions. The resulting coatings may exhibit enhanced properties including for instance excellent thermal stability, heat resistance, durability and/or good barrier and corrosion protection properties.

## Description

### TECHNICAL FIELD

The present disclosure relates to water-based coating compositions useful for forming protective coatings on substrates, in particular metal substrates. More specifically, the present disclosure relates to water-based coating compositions with a binder component comprising at least one chlorinated resin, coatings and coated articles derived therefrom, and related methods and uses. The water-based coating compositions may impart enhanced performance to resulting coatings, including in particular excellent thermal stability and heat resistance, durability and good barrier and corrosion protection properties.

### TECHNICAL BACKGROUND

Metal parts and structures find wide-spread use in applications, including in the construction, mechanical and chemical engineering, aviation and automotive industries. The metal parts and structures may be exposed during their service life to harsh conditions, such as moisture, corrosive chemicals and heat, which may promote corrosion of the metal part or structure.

A common approach in the art for protecting metal parts or structures against corrosion involves applying to their surface(s) one or more protective coating layers. Various solvent-based coating systems as well as water-based coating systems are available for this purpose. Due to increasing environmental awareness, there is a trend towards the use of water-based coating compositions. It may however be difficult to formulate water-based coating systems with good processing properties which yield well adherent, durable coatings that provide efficient protection against corrosion, meeting the stringent corrosion tests applied in industry. Chlorinated resins have found wide-spread use in coating systems for protective coatings and are appreciated due to providing typically good corrosion protection and adequate adhesion to various kinds of substrates at relatively low costs. Nevertheless, chlorinated resins are susceptible to thermal degradation when exposed to elevated temperatures, such as temperatures of 60°C or more, which may adversely affect coating performance, for example giving rise to formation of blisters, cracks and other coating defects, delamination and reducing the coating's barrier and corrosion protection properties. Chlorinated resin-based coating formulations with improved heat resistance have been developed, however, their heat resistance, durability and corrosion protection remain still insufficient in fields of application where the coated metal parts are exposed to substantial thermal loads, like temperatures of 100°C or more, such as 140°C or more, and/or recurring thermal cycling with rapid heating/cooling rates, particularly at high coating layer thicknesses, such as above 100 µm. For instance, metal parts used in motor vehicles such as cars, trucks and construction and utility vehicles may easily be subjected to such demanding thermal conditions during their service life. Accordingly, there is an ongoing need in the industry for improved water-based coating compositions that may yield durable coatings, which are well adherent and provide effective corrosion protection to metal substrates, exhibiting enhanced heat resistance to withstand also substantial thermal loads, if possible obtainable in a cost-efficient manner and without limitations to applicable coating layer thickness.

### SUMMARY

The present disclosure accordingly relates to a water-based coating composition. The water-based coating composition comprises an aqueous carrier, a binder component comprising at least one chlorinated resin, a filler component comprising at least one carbonate type filler, and at least one anti-corrosion agent, wherein (A) the binder component further comprises at least one epoxy-functional resin in an amount corresponding to a weight ratio of the at least one epoxy-functional resin to the at least one chlorinated resin of at least 0.1, and the composition has a filler to binder ratio on a weight basis of 1.0 or more, or (B) the composition has a filler to binder ratio on a weight basis of 2.0 or more.

The present disclosure also provides a method for coating a substrate. The method comprises applying a water-based coating composition according to the present disclosure, as mentioned above and described in more detail below, to form a coating layer over at least a portion of at least one surface of the substrate, and drying of the formed coating layer.

The present disclosure also relates to a coating, such as a monocoat or a multilayer coating, formed using the' water-based coating composition disclosed herein. The coating can for example be formed according to the method for coating a substrate disclosed herein.

Furthermore, the present disclosure relates to a coated article comprising a substrate, and a coating as disclosed herein formed over at least a portion of at least one surface of the substrate.

Further within the scope of the present disclosure is the use of a water-based coating composition or a coating as disclosed herein for imparting corrosion protection to a substrate, such as a metallic substrate, particularly to a substrate exposed to temperatures of 100°C or more during service life.

The present disclosure is also directed towards the use of a carbonate type filler in a chlorinated resin containing coating composition to enhance the heat resistance of a coating obtainable from the coating composition and/or to mitigate or avoid thermally induced degradation of a substrate coated with a coating obtainable from the coating composition.

### BRIEF DESCRIPTION OF DRAWINGS

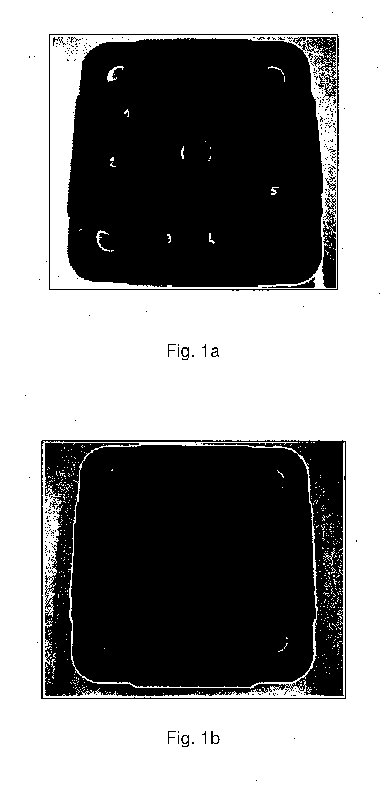

Figure 1a represents a photograph of a metal part coated with a coating according to the present disclosure derived from the water-based coating composition according to Example 5A after thermal cycling (five cycles of heating to 170°C and quenching to room temperature).
Figure 1b represents a photograph of a metal part coated with a comparative coating derived from the water-based coating composition according to Example 1A after thermal cycling (five cycles of heating to 170°C and quenching to room temperature).

### DETAILED DESCRIPTION

Unless indicated to the contrary, the numerical parameters and ranges set forth in the following specification and appended claims are approximations. Accordingly, unless otherwise expressly specified, all numbers such as those expressing values, ranges, amounts, or percentages may be read as if prefaced by the word "about", even if the term does not expressly appear. Notwithstanding that the numerical ranges and parameters setting forth the broad scope of the disclosure are approximations, the numerical values set forth in the specific examples are reported as precisely as possible. Any numerical values, however, contain errors necessarily resulting from the standard deviation in their respective measurement.

Also, it should be understood that any numerical range recited herein is intended to include all subranges subsumed therein. For example, a range of "1 to 10" is intended to include any and all sub-ranges between and including the recited minimum value of 1 and the recited maximum value of 10, that is, all subranges beginning with a minimum value equal to or greater than 1 and ending with a maximum value equal to or less than 10, and all subranges in between, e.g., 1 to 6.3, or 5.5 to 10, or 2.7 to 6.1. Any endpoints of ranges and/or numbers within those ranges can be combined within the scope of the present disclosure.

All parts, amounts; concentrations etc. referred to herein are by weight, unless specified otherwise.

As used herein, the term "comprising" is understood to be open-ended and to not exclude the presence of additional undescribed or unrecited elements, materials, ingredients, or method steps etc. The terms "including", "containing" and like terms are understood to be synonymous with "comprising". As used herein, the term "consisting of" is understood to exclude the presence of any unspecified element, ingredient, or method step etc. Although the disclosure has been described in terms of "comprising", "consisting of" or "consisting essentially of" are also within the scope of the present disclosure. For example, while the disclosure has been described in terms of a water-based coating composition comprising an aqueous carrier, a binder component and at least one anti-corrosion agent with the further features defined in appended independent claim 1, a respective coating composition consisting essentially of and/or consisting of an aqueous carrier, the binder component and at least one anti-corrosion agent is also within the scope of the present disclosure. As used herein, "consisting essentially of" means that any additional unrecited coating component(s), if present, will be present in relatively low amounts (for example 2 wt.% or less, such as 1 wt.% or less, based on the total weight of the composition) such that they will not materially affect the properties of the coating composition or coatings derivable therefrom.

As used herein, the singular form of "a", "an", and "the" include plural referents unless the context clearly dictates otherwise. Thus, although the disclosure has been described in terms of "an" aqueous carrier, "a" chlorinated resin, "an" anti-corrosion agent, and the like, one or more of any of these components or other recited components can be used according to the present disclosure.

"Corrosion" as utilized herein refers to a gradual degradation of a material, such as a metallic substrate or part, for example by a chemical or electrochemical oxidization process. "Corrosion resistance" refers to a material's ability to resist degradation caused by corrosion.

Further, the term "polymer" refers collectively to oligomers and polymers, including for example homopolymers (e.g., prepared from a single monomer species), copolymers (e.g., prepared from at least two monomer species) and graft polymers. The term "resin" may be used interchangeably with the term "polymer".

As used herein, "(meth)acrylate" and like terms refers both to the acrylate and the corresponding methacrylate. In addition, as used herein, "ethylenically unsaturated group" refers to a group having at least one carbon-carbon double bond. An ethylenically unsaturated group can participate in polymerization reactions, being "polymerizable".

As used herein, the terms "on", "applied on/over", "formed on/over", "deposited on/over", "overlay" and "provided on/over" a surface mean applied, formed, deposited, overlay, or provided, respectively, on but not necessarily in contact with the surface. For example, a coating layer based on the water-based coating composition of the present disclosure "formed over" a substrate does not preclude the presence of one or more other coating layers of the same or different composition located between the formed coating layer and the substrate.

As set out above, the present disclosure relates to a water-based coating composition comprising an aqueous carrier, a binder component comprising at least one chlorinated resin, a filler component comprising at least one carbonate type filler and at least one anti-corrosion agent.

The coating composition is water-based as opposed e.g. to solvent-based coating compositions or powder coating compositions. As such, the coating compositions of the present disclosure comprise an aqueous carrier medium (also referred to shortly as "aqueous carrier"). The aqueous carrier medium comprises water and optionally one or more organic solvent(s). "Aqueous" as used herein means that the carrier medium comprises at least 50 weight percent of water, based on the total weight of the carrier medium. For example, the aqueous carrier can comprise at least 70 weight percent, or at least 80 weight percent, or at least 90 weight percent, or at least 95 weight percent, or at least 99 weight percent of water, based on the total weight of the carrier. The aqueous carrier can comprise up to 100 weight percent of water, based upon the total weight of the carrier, in other words the aqueous carrier can consist or essentially consist of water. Typically, the aqueous carrier comprises from 80 to 100 weight percent, such as from 90 to 100 weight percent, or from 95 to 99 weight percent of water, based on the total weight of the carrier.

As set forth above, the aqueous carrier may optionally comprise one or more organic solvent(s) in addition to water. The optional organic solvent(s) may be used for a variety of purposes, including for example to adjust the viscosity, polarity and drying properties of the coating composition, aid in film formation or contribute to stability of the composition. The organic solvent is not particularly limited. Any type of organic solvent that is useful for formulating water-based coating compositions in the art can be employed. Typically, organic solvents are used, which are soluble in or miscible with water. Illustrative examples of organic solvents that can be used in the coating compositions of the present disclosure include, without being limited thereto, alcohols such as ethanol, isopropyl alcohol, n-propanol, butanol, esters, including ester alcohol(s), ethers such as glycol ether(s) and butyl CELLOSOLVE^{™}, ketones, aldehydes, and mixtures or combinations of any of the foregoing.

The amount of the one or more organic solvent(s), if used in the aqueous carrier, can vary, depending on factors such as the type of organic solvent(s) and the purpose for being added. The total amount of organic solvents in the aqueous carrier is generally less than 50 wt.%, based on the total weight of the carrier medium. The aqueous carrier of the water-based coating composition may include for example from 0 to less than 50 wt.%, such as from 0.1 to 30 wt.%, or from 0.5 to 20 wt.%, or from 1 to 10 wt.%, or from 1 to 5 wt.% of the organic solvent(s), based on the total weight of the aqueous carrier.

The water-based coating composition of the present disclosure can comprise the aqueous carrier in any amount useful to serve as a carrier medium for the remaining ingredients of the coating composition. For example, the water-based coating composition may comprise at least 10 wt.%, such as at least 15 wt.%, or at least 20 wt.%, of the aqueous carrier, based on the total weight of the composition. The water-based coating composition can comprise for example up to 90 wt.%, such as up to 70 wt.%, or up to 50 wt.%, or up to 40 wt.%, or up to 30 wt.% of the aqueous carrier, based on the total weight of the composition. The water-based coating composition may comprise the aqueous carrier in an amount in a range between any of the recited values such as from 10 to 90 wt.%, or from 20 to 70 wt.%, based on the total weight of the composition.

As mentioned above, the water-based coating composition of the present disclosure moreover comprises a binder component. A "binder" as understood herein refers to a material or substance that may hold other materials included in the composition together, e.g. by forming a cohesive film and adhere to a substrate when the composition is applied thereto and dried. As such, a binder may facilitate binding of the typically particulate filler(s) of the coating composition together in a coherent matrix and binding to a substrate. Typical organic binders include resins or polymers. The binder component may contain a single resin or polymer material or a mixture of two or more different resin or polymer materials. The binder(s) can be supplied to the water-based coating composition in solid or liquid form. The binder can for example be supplied as a dispersion of a resin or polymer in water or an aqueous carrier.

The binder component of the water-based coating composition of the present disclosure comprises at least one chlorinated resin. As used herein, "chlorinated resin" means any resin material that includes chlorine bound to the resin. The Cl substituents can be attached directly to the polymer backbone by a single bond and/or be present in pendant groups bound to the polymer backbone.

Chlorinated resins may for example be prepared by free radical polymerization from polymerizable monomers, which include one or more chlorine containing monomer(s). Chlorine containing monomers, which may be utilized for producing the polymer of the chlorinated resin include monomers with one or more polymerizable group(s) such as ethylenically unsaturated groups and at least one bound chlorine atom. Typically, such chlorine containing monomers include from 2 to 20, such as from 2 to 10, or from 2 to 4 carbon atoms. Suitable examples include, without limitation, chlorinated ethylene derivatives, chlorinated propylene derivatives, and mixtures or combinations of these, such as monochloroethylene, 1,1-dicholoroethylene (i.e., vinylidene chloride), 1,2-dichloroethylene, 1,1,2-trichloroethylene, tetrachloroethylene, 1-chloropropylene, 2-chloropropylene, 1,1-dichloropropylene, 2,2-dichloropropylene, 1,2-dichloropropylene, 1,1,1-trichloro-2-propylene, 1,1,2-trichioro-1-propylene, 1,2,3-trichloropropylene, and combinations and mixtures thereof.

In addition to the one or more Cl substituents and polymerizable group(s), the chlorine containing monomers useful to prepare the chlorinated resins may optionally comprise one or more additional functional groups. Examples of such optional additional functional groups include hydroxy, thiol, amino, amide, isocyanate, nitrile, carboxy, sulfate, sulfite, and epoxy groups.

In addition to the one or more chlorine containing monomer(s), optionally one or more copolymerizable other monomer(s) may be used to prepare the chlorinated resin, if desired. As such the resulting chlorinated resin can comprise constituting units derived from the one or more chlorine containing monomer(s) and optionally constituting units derived from one or more copolymerizable other monomer(s). Examples of copolymerizable other monomers include ethylenically unsaturated esters, amides, and anhydrides of carboxylic acids such as (meth)acrylic acid and derivatives thereof, such as glycidyl(meth)acrylate, methylaminoethyl (meth)acrylate, t-butylaminoethyl (meth)acrylate, (meth)acrylamide, 4-pentanoguanamine; hydroxylalkyl esters such as hydroxypropyl(meth)acrylate, hydroxyethyl (meth)acrylate, (meth)acrylonitrile; N-alkoxyalkyl amides such as methoxymethyl (meth)acrylamide and butoxy-(methyl) acrylamide; hydroxyalkyl amides such as N-methylol (meth)acrylamide; dicarboxylic acids such as maleic acid and anhydrides thereof, and mixtures or combinations of any of the foregoing.

Polymerization of the one or more chlorine containing monomer(s) and optionally one or more copolymerizable other monomer(s) to prepare a chlorinated resin can be carried out by free radical polymerization known as such from the art. Polymerizable groups of the chlorine containing monomer(s) and, if present, non-chlorinated monomer(s) can conveniently be reacted by exposing the reactants to a suitable source of energy, often in the presence of auxiliary agents (e.g., initiators, etc.) that help promote the polymerization reaction. The energy source used for achieving polymerization may for example provide actinic radiation (e.g. having a wavelength or range of wavelengths in the ultraviolet or visible region of the spectrum), accelerated particles (e.g., electron beam radiation), or thermal energy (e.g., heat or infrared radiation).

The Cl content of the chlorinated resin can vary over a wide range. The resin can be partially chlorinated or perchlorinated. If the Cl content is too low, the corrosion protection provided by the resin may be less than desired. The Cl content can be characterized as the weight percent of Cl included in the polymer of the chlorinated resin. For higher levels of corrosion protection, it may be desirable that the polymer of the chlorinated resin includes at least 10 weight percent, such as 20 weight percent or more, or 30 weight percent or more, or 40 weight percent or more, or 50 weight percent or more, or 60 weight percent or more of Cl, based on the total weight of the polymer.

According to the present disclosure, the at least one chlorinated resin preferably comprises or is a polymer comprising constituting units derived from vinylidene chloride and optionally constituting units derived from one or more further ethylenically unsaturated monomers, for example any one of the above-mentioned copolymerizable other monomer(s). For example, the chlorinated resin can comprise a copolymer that comprises constituting units derived from vinylidene chloride and constituting units derived from one or more (meth)acrylate monomers. The chlorinated resin can accordingly preferably comprise a polyvinylidene chloride (PVDC) polymer. As used herein, polyvinylidene chloride polymer refers to a polymer, wherein constituting units derived from 1,1-dichloroethylene constitute at least 40 percent, such 60 percent or more, or 75 percent or more, or 90 percent or more, and up to 100 percent of the total weight the polymer. PVDC polymers that can be used according to the present disclosure accordingly include both homopolymers of 1,1-dichloroethylene as well as copolymers of 1,1-dichloroethylene and one or more other monomers, such as for example a polyvinylidene chloride (meth)acrylate copolymer.

Numerous different chlorinated resins such as PVDC polymers that can be used in the coating compositions of the present disclosure are commercially available. Illustrative examples of such commercially available chlorinated resins include, without limitation, those available under the tradenames DIOFAN (available from Dow Chemical and/or Solvay Plastics), POLIDENE (e.g., 33-082, 33-038, 33-086, 33-083, 33-075, and 33-081 available from Scott Bader), HALOFLEX (e.g., 202 and 202S available from DSM Neoresins), and PERMAX (e.g., 803 and 805 available from Lubrizol).

The amount of the chlorinated resin in the water-based coating composition can vary in a wide range. The water-based coating composition can include 10 wt.% or more, such as 20 wt.% or more, or 30 wt.% or more, or 40 wt.% or more, or 50 wt.% or more, or 60 wt.% or more of the at least one chlorinated resin, based on the total weight of resin solids in the water-based coating composition. The water-based coating composition can include 70 wt.% or less, such as 80 wt.% or less, or 90 wt.% or less, or 95 wt.% or less, or up to 100 wt.% (i.e. the binder component can consist of the at least one chlorinated resin) of the at least one chlorinated resin, based on the total weight of resin solids in the water-based coating composition. The water-based coating composition may comprise the at least one chlorinated resin in an amount in a range between any of the recited values such as from 30 to 95 wt.%, or from 50 to 90 wt.%, based on the total weight of resin solids in the water-based coating composition. Typically, the water-based coating composition comprises at least 50 wt.%, such as at least 70 wt.% of the at least one chlorinated resin, based on the total weight of resin solids in the water-based coating composition.

The at least one chlorinated resin can serve as a film-forming resin and to impart to the resulting coating good barrier properties and adhesion to the substrate. Chlorinated resins are moreover advantageously available at relatively low costs. On the other hand, chlorinated resins such as polyvinylidene chloride (PVC) and polyvinylidene dichloride (PVDC) are typically susceptible to degradation in strongly acidic aqueous environments and upon exposure to elevated temperatures above about 60°C. Heat-induced degradation of chlorinated resins is a complex process that may include, without wishing to be bound to any mechanism, dehydrochlorination, auto-oxidation, and chain scission followed by rearrangements of the reaction products by crosslinking and condensation reactions. HCI and other chlorinated reaction products produced thereby may in turn catalyze the degradation, for example HCI auto-catalyzing the dehydrochlorination reaction. As a consequence, a number of coating issues such as discoloration, embrittlement, blistering and delamination as well as corrosive attack of the underlying substrate may conventionally occur. The inventors to the present disclosure however unexpectedly found by diligent studies that the coating compositions when formulated in accordance with the present disclosure can -despite containing chlorinated resin- yield coatings that exhibit excellent heat resistance even when exposed to temperatures of 100°C or more, such as 150°C or more, and good corrosion protection, showing significantly reduced or no heat-induced coating degradation.

To this end, the binder component of the water-based coating composition can contain one or more other resins in addition to the at least one chlorinated resin. Such other resins are typically non-chlorinated, i.e. do not contain bound chlorine. Examples of resins that can be used in addition to the at least one chlorinated resin include, without being limited thereto, polyurethanes, polyesters, polyolefins, (meth)acrylic polymers, phenolic resins, melamine resins, polyamides, epoxy-functional resins and mixtures and combinations thereof. Partial substitution of the chlorinated resin by such non-chlorinated resin(s) in the binder component can improve the heat resistance and thermal stability of coatings derived from the coating compositions including the chlorinated resin. The amount of other resin(s), if used in addition to the at least one chlorinated resin, can vary. For instance, the water-based coating composition can include 5 wt.% or more, such as 10 wt.% or more, or 20 wt.% or more, or 30 wt.% or more, of the one or more additional resin(s), based on the total weight of resin solids in the water-based coating composition. The water-based coating composition can comprise 90 wt.% or less, such as 80 wt.% or less, or 70 wt.% or less, or 60 wt.% or less, or 50 wt.% or less, or 40 wt.% or less, of the one or more additional resin(s), based on the total weight of resin solids in the water-based coating composition. The water-based coating composition may comprise the one or more additional resin(s), if used, in an amount in a range between any of the recited values such as from 5 to 70 wt.%, or from 10 to 50 wt.%, based on the total weight of resin solids in the water-based coating composition.

According to the present disclosure, the binder component can in particular comprise one or more epoxy-functional resin in addition to the at least one chlorinated resin. An epoxy-functional resin denotes a resin, which comprises one or more epoxide group(s), also referred to as oxirane group(s). The epoxide groups are reactive sites and can react in an addition reaction with various other substances including for instance reactants with active hydrogen functionality such as amine, hydroxyl or carboxylic acid groups or acids like HCI. The epoxy-functional resin may thus scavenge HCI and other products from the dehydrochlorination degradation reaction of the chlorinated resin and thereby contribute to promote thermal resistance and reduce or avoid heat-induced degradation of the resulting coatings. In addition, the epoxy-functional resin can act as a film-forming resin.

A wide variety of epoxy-functional resins may be utilized, including aliphatic epoxy resins and aromatic epoxy resins. Examples include, without being limited thereto, cycloaliphatic epoxy resins, epoxidized vegetable oils, epoxy-functional phenolic resins, novolac epoxy resins, cresylic novolac epoxy resins, glycidyl-ether epoxy resins, glycidyl-ester epoxy resins, glycidyl-amine epoxy resins, bisphenol (such as bisphenol A and/or bisphenol F) epoxy resins, and mixtures and combinations thereof. The epoxy-functional resin(s) can in particular comprise an aromatic epoxy resin, such as an epoxy-functional phenolic resin, novolac epoxy resin, epoxy-functional phenol novolac resin, epoxy-functional cresylic novolac epoxy resin, bisphenol (such as bisphenol A and/or bisphenol F) epoxy resin, such as a Bisphenol A novolac epoxy resin or a mixture or combination thereof.

The epoxy-functional resin may be characterized by its epoxy equivalent weight. The epoxy-functional resin can have an epoxy equivalent weight of 50 g/eq or more, such as 100 g/eq or more, or 150 g/eq or more, or 180 g/eq or more, or 200 g/eq or more. The epoxy-functional resin can for example have an epoxy equivalent weight of 5,000 g/eq or less, such 2,000 g/eq or less, or 1,000 g/eq or less, or 800 g/eq or less, or 600 g/eq or less, or 500 g/eq or less, or 400 g/eq or less, or 300 g/eq or less. The epoxy-functional resin may for example have an epoxy equivalent weight in a range between any of the recited values such as from 50 to 5,000 g/eq, or from 100 to 1,000 g/eq or from 150 to 600 g/eq. Typically, the epoxy-functional resin has an epoxy equivalent weight in a range from 100 to 1,000 g/eq, or from 150 to 600 g/eq, such as from 180 to 300 g/eq. The epoxy equivalent weight of an epoxy resin can be determined according to ASTM D1652-11(2019).

In addition or alternatively, the epoxy-functional resin may be characterized by its average epoxy functionality, that is the average number of epoxy groups per polymer molecule. The epoxy-functional resin can have an average epoxy functionality of 1.5 or more, such as of 2 or more, or of 2.5 or more, or 3 or more. The epoxy-functional resin can have an average epoxy functionality of or 15 or less, such as 12 or less, or 10 or less, or 8 or less, or 6 or less. The epoxy-functional resin may for example have an average epoxy functionality in a range between any of the recited numbers such as from 1.5 to 15, or from 2 to 12. Typically, the epoxy-functional resin has an average epoxy functionality in a range from 3 to 10.

Suitable epoxy functional resins are commercially available and include, for example, Ancarez^{™} AR555 from Evonik, Beckopox 386/52 WA and Beckopox 147 W from Allnex, and Epi-rez^{™} 5003-W-55, Epi-rez^{™} 5108-W-60, Epi-rez^{™} 5054-W-65, Epi-rez^{™} 3540, Epi-rez^{™} 5522 and Epi-rez^{™} 6006-W-68, all from Hexion, or mixtures or combinations of these. The epoxy-functional resin may be supplied in liquid or solid form. The epoxy-functional resin may for example be supplied in a solvent or carrier. For example, the epoxy-functional resin may be in form of a dispersion in a liquid carrier such as water or an aqueous medium.

The amount of the epoxy-functional resin, if used in the water-based coating composition, can vary. The water-based coating composition as disclosed herein may comprise 5 wt.% or more, such as 7 wt.% or more, or 10 wt.% or more, or 15 wt.% or more, or 20 wt.% or more, or 25 wt.% or more, of the one or more epoxy-functional resin, based on the total weight of resin solids in the water-based coating composition. The water-based coating composition can comprise 70 wt.% or less, such as 50 wt.% or less, or 40 wt.% or less, or 35 wt.% or less, or 30 wt.% or less, of the one or more epoxy-functional resin, based on the total weight of resin solids in the water-based coating composition. The water-based coating composition may comprise the one or more epoxy-functional resin, if used, in an amount in a range between any of the recited values such as from 5 to 50 wt.%, or from 7 to 40 wt.%, or from 10 to 30 wt.%, based on the total weight of resin solids in the water-based coating composition.

It has been found that replacing a portion of the chlorinated resin(s) by one or more epoxy-functional resin may contribute to provide stable, well processable coating compositions, which yield corrosion protective coatings having a reduced tendency towards blistering and formation of other coating defects when exposed to heat, also at moderate filler to binder ratio, such as a filler to binder ratio (on weight basis) of 1.0 or more. More specifically, according to the present disclosure the binder component may thus comprise the one or more epoxy-functional resin in an amount corresponding to a weight ratio of the one or more epoxy-functional resin to the at least one chlorinated resin of at least 0.1. For example, the weight ratio of the one or more epoxy-functional resin to the at least one chlorinated resin can be 0.15 or more, such as 0.2 or more, or 0.25 or more, or 0.3 or more, or 0.35 or more. The weight ratio of the one or more epoxy-functional resin to the at least one chlorinated resin can for example be as large as up to 2.0, such as 1.5 or less, or 1.2 or less, or 1.0 or less. The weight ratio of the one or more epoxy-functional resin to the at least one chlorinated resin can be in a range between any of the recited values, such as from 0.1 to 1.5 or from 0.2 to 1.0. Typically, the weight ratio of the one or more epoxy-functional resin to the at least one chlorinated resin is in a range from 0.2 to 1.0.

The form in which the binder component respectively the resins comprised thereby, such as the chlorinated resin and the optional one or more other resin(s) such as the epoxy-functional resin(s) described above, are present in the water-based coating composition is not particularly limited. The binder or resin(s) may for example be dissolved in the aqueous carrier or may be dispersed in the aqueous carrier. Typically, the binder or resin(s) are dispersed in the aqueous carrier. The one or more resins of the binder may for example be dispersed in the aqueous carrier in a form of liquid droplets and/or solid particles. The water-based coating composition may or may not comprise surfactants, wetting agents or other additives aiding in dispersing the binder component as discussed below.

The water-based coating composition disclosed herein may be formulated to have any desired resin content. The total resin solids content is typically 5 wt.% or more, based on the total weight of the coating composition. The water-based coating composition can for example have a total resin solids content of 10 wt.% or more, or 15 wt.% or more, or 20 wt.% or more, or 25 wt.% or more, based on the total weight of the coating composition. The water-based coating composition can for example have a total resin solids content of 60 wt.% or less, such as 50 wt.% or less, or 40 wt.% or less, or 30 wt.% or less, based on the total weight of the coating composition. The total resin solids content can be in a range between any of the recited values, such as from 10 wt.% to 50 wt.%, or from 15 wt.% to 40 wt.%, based on the total weight of the coating composition.

The water-based coating composition as described herein further comprises a filler component in addition to the aqueous carrier and the binder component described above. The term "filler" is used herein in accordance with its common meaning in the art. A "filler" may thus refer to a solid non-binder substance, which becomes incorporated into a matrix formed by the binder in the resulting coating. Typically, a filler comprises finely divided material, e.g in the form of particles, granules or fibers, beads or alike. A filler may typically comprise or be made of a non-resinous material such as an inorganic material.

According to the present disclosure, the filler component comprises at least one carbonate type filler. As used herein, "carbonate type filler" means a filler that comprises an inorganic compound or salt comprising one or more anions derived from carbonic acid (H₂CO₃), such as carbonate (CO₃²⁻) and/or hydrogencarbonate (HCO₃⁻). Beside CO₃²⁻ and/or HCO₃⁻ the carbonate type filler may comprise further anions such as OH⁻, silicates, alumosilicates, P-containing anions like phosphates, N-containing anions like NO₃⁻ and/or NO₂⁻, S-containing anions like sulfates or combinations thereof. The carbonate type filler further may comprise one or cations such as cations having a valency of +1 to +4. Typically, the carbonate type filler comprises one or more polyvalent cations, i.e. cations having a valency of +2 or more. The cations can comprise metal cations or non-metallic cations such as for example ammonium, or combinations thereof. Typically, the carbonate type filler comprises one or more metal cation(s). The metal cation(s) can comprise one or more main group element(s) of the periodic system of elements, such as e.g. from group 1 (alkaline metals), 2 (alkaline earth metals) and/or group 13 (boron group) according to IUPAC classification. Alternatively or in addition, the metal cation(s) can comprise one or more transition group element(s), such as from one or more of groups 3 to 12 of the periodic system of elements, or one or more lanthanides or actinides. Preferably, the carbonate type filler comprises one or more cations of one or more alkaline earth metals, such as Ca, Mg, Sr, Ba, or combinations thereof. Often the carbonate type filler can comprise a mineral occurring in nature. Examples of suitable carbonate type fillers include, without being limited thereto, calcium carbonate (e.g. calcite, aragonite, vaterite), magnesium carbonate (e.g. magnesite), barium carbonate, strontium carbonate, dolomite, malachite, azurite, hydrotalcite, rhodochrosite, sodium bicarbonate, magnesium bicarbonate, calcium bicarbonate, or mixtures or combinations thereof. A particularly preferred carbonate type filler is calcium carbonate (CaCO₃).

The at least one carbonate type filler is generally a particulate solid material. It is typically substantially insoluble in water. Thus, the at least one carbonate type filler may for example have a solubility in water of less than 1 g/L, such as less than 0.5 g/L, often less than 0.1 g/L, or less than 0.05 g/L, at 20°C. The form of the particles is not particularly limited and may comprise for example spherical, nodular, polygon, needle, flake or platelet-like or any other shape. The particle size of the carbonate type filler can range from nanoparticles to coarse particles having sizes up to several tens of µm. The carbonate type filler may be characterized by its particle size distribution. The particle size distribution can for example be determined by X-ray gravitational liquid sedimentation according to DIN-ISO 13317-3:2001-03. From the measured particle size distribution it can for example be determined which percentage of the total number of particles has a size up to a certain value. The D_{98%} value accordingly indicates that 98% of all particles have a size up to the recited value. The carbonate type filler may for example have a particle size distribution with a D_{98%} value of 0.5 µm or more, such as 1 µm or more, or 2 µm or more, or 3 µm or more, or 4 µm or more, or 5 µm or more. The carbonate type filler can for instance have a particle size distribution with a D_{98%} value of 200 µm or less, such as 150 µm or less, or 100 µm or less, or 70 µm or less, or 50 µm or less, or 40 µm or less, or 30 µm or less, or 25 µm or less, or 20 µm or less, or 15 µm or less, or 10 µm or less. The carbonate type filler can have a particle size distribution with a D_{98%} value in a range between any of the recited values, such as from 0.5 µm to 150 µm, or from 1 µm to 50 µm, or from 2 µm to 30 µm, or from 5 µm to 20 µm.

In addition or alternatively, the one or more carbonate type fillers may be characterized by their oil absorptivity. The oil absorptivity can be measured according to DIN EN ISO 787-5:1995-10. The carbonate type filler may for example have an oil absorptivity of 1 g/100g or more, such as 3 g/100g or more, or 5 g/100g or more, or 12 g/100g or more, or 15 g/100g or more. The carbonate type filler may have an oil absorptivity of 50 g/100g or less, such as 40 g/100g or less, or 30 g/100g or less, or 25 g/100g or less, or 20 g/100g or less. The carbonate type filler can have an oil absorptivity in a range between any of the recited values, such as from 2 to 50 g/100g, or from 5 to 30 g/100g, or from 10 to 20 g/100g.

In addition or alternatively, the one or more carbonate type fillers may be characterized by their specific surface area. The specific surface area can be determined by nitrogen adsorption according to the procedure established by Brunauer, Emmett and Teller (cf. e.g. Adsorption of Gases in Multimolecular Layers, Journal of the American Chemical Society, vol. 60, no. 2, 1938, p. 309-319), referring to the specific surface area accordingly as BET surface area. The carbonate type filler may for example have a BET surface area of 0.1 m²/g or more, such as 0.3 m²/g or more, or 0.5 m²/g or more, or 1 m²/g or more, or 1.5 m²/g or more, or 2 m²/g or more. The carbonate type filler can have a BET surface area of 50 m²/g or less, such as 40 m²/g or less, or 30 m²/g or less, or 20 m²/g or less, or 15 m²/g or less, or 10 m²/g or less. The carbonate type filler can have a BET surface area in a range between any of the recited values, such as from 0.1 m²/g to 50 m²/g, or from 0.5 m²/g to 20 m²/g, or from 1 m²/g to 10 m²/g.

Carbonate type fillers, which may have the above-mentioned properties, are available from commercial sources. Examples of commercially available carbonate type fillers include, without limitation, those available under the tradenames Calplex from Calcit d.o.o, Omyacarb from Omya AG, or Hakuenka from Shiraishi-Omya GmbH.

Incorporation of the at least one carbonate type filler has unexpectedly been found to dramatically improve the heat resistance and thermal stability of coatings derived from the water-based coating compositions containing chlorinated resin. Thus, coatings derived from the coating compositions of the present disclosure containing the at least one carbonate type filler were found to withstand substantial thermal loads, including temperatures of 100°C or more, such as 150°C or more, or even 170°C or more, as well as recurring thermal cycling with rapid heating/cooling rates substantially without degradation of the corrosion protective coating and corrosion of the underlying coated substrate, also over extended periods of time such as several months (e.g. 6 months or more). On the contrary, respective coatings without the carbonate type filler exhibited heat-induced degradation of the coating and an associated corrosive attack of the substrate surface, turning from a corrosion protective coating into a corrosive coating and leading to failure within a few weeks after heat exposure. Without intending to be bound by any theory, it is believed that the carbonate type filler can effectively slow down or prevent heat-induced degradation of the chlorinated resin and protect the coated substrate surface from corrosion, for example by stabilizing the chlorinated resin, neutralizing or reacting with acid and/or other substances, which may promote or have a catalytic effect on the degradation of the chlorinated resin and/or by formation of a passivating layer on the substrate surface.

The water-based coating composition as described herein can comprise the at least one carbonate type filler in any amount that is effective. Typically, the water-based coating composition comprises the at least one carbonate type filler in an amount of 0.5 wt.% or more, based on the total weight of the composition, although also lower amounts are possible, depending for example on the intended application and desired degree of heat resistance. The water-based coating composition can comprise the at least one carbonate type filler in an amount of 1 wt.% or more, or 2 wt.% or more, or 3 wt.% or more, or 5 wt.% or more, or 7 wt.% or more, based on the total weight of the composition. The water-based coating composition usually comprises no more than 25 wt.% of the at least one carbonate type filler, based on the total weight of the composition. Typically, the water-based coating composition comprises 20 wt.% or less of the at least one carbonate type filler, based on the total weight of the composition. The water-based coating composition can for example comprise the at least one carbonate type filler in an amount of 15 wt.% or less, such as 10 wt.% or less, based on the total weight of the composition. The water-based coating composition can comprise the at least one carbonate type filler in an amount in a range between any of the recited values such as from 0.5 to 25 wt.%, or from 1 wt.% to 20 wt.%, or from 3 wt.% to 15 wt.%, based on the total weight of the composition.

The water-based coating composition as disclosed herein may comprise the at least one carbonate type filler in such an amount that the weight ratio of the at least one carbonate type filler to the at least one chlorinated resin is 0.05 or more. The weight ratio of the at least one carbonate type filler to the at least one chlorinated resin can for example be 0.1 or more, or 0.15 or more, or 0.2 or more, or 0.3 or more. The water-based coating composition may comprise the at least one carbonate type filler in such an amount that the weight ratio of the at least one carbonate type filler to the at least one chlorinated resin is 2.0 or less, such as 1.5 or less, or 1.0 or less. The weight ratio of the at least one carbonate type filler and the at least one chlorinated resin can be in a range between any of the recited values such as from 0.05 to 2.0, or from 0.1 to 1.0.

The filler component may optionally comprise one or more additional fillers in addition to the at least one carbonate type filler described above. The optional additional fillers are non-carbonate type fillers, including all types of fillers (including extenders or pigments) different from the carbonate-type fillers described above. Incorporation of the optional additional filler(s) may serve for instance to achieve desirable processing properties such as viscosity or sag resistance of the coating composition and/or to further improve the corrosion protection and/or control permeability of the coatings derivable therefrom.

The one or more optional non-carbonate type fillers are typically made of inorganic material. The non-carbonate type fillers are typically substantially insoluble in water, which can have a meaning as set forth above in the context of the carbonate type filler. Examples of possible non-carbonate type fillers include, without being limited thereto, hydroxides, oxides, nitrides, carbides, oxynitrides, oxycarbides, silicates, alumosilicates, silica, glasses and mixtures or combinations thereof. The non-carbonate type fillers can comprise one or more elements selected from group 1 (alkaline metals), 2 (alkaline earth metals), group 13 (boron group), Si, Ge, Sn, Pb, Sb, Bi, transition metals, lanthanides, actinides or mixtures or combinations thereof. Examples of suitable non-carbonate type fillers include, without being limited thereto, silica, silicates, clay, talc, mica, BaSO₄, aluminum silicate, aluminum hydroxide, glass beads, wollastonite, and mixtures or combinations thereof. Preferably, the water-based coating composition includes in addition to the at least one carbonate type filler one or more fillers selected from silica, silicates, clay, talc, glass beads or mixtures or combinations thereof. The use of talc is particularly preferred.

The optional non-carbonate type filler(s) comprises typically a particulate solid material. The form of the particles is not particularly limited and may comprise for example spherical, nodular, polygon, needle, flake or platelet-like or any other shape. The properties of the additional filler, including particle shape, particle size, aspect ratio, porosity, oil absorptivity and the like, may vary within ranges commonly seen in commercially available respective filler materials. The optional additional filler may accordingly be selected from commercially available filler materials.

If used, the one or more non-carbonate type fillers can be incorporated in the water-based coating composition as described herein in any effective amount. The effective amount may depend on the specific filler as well as the intended purpose of adding it and can be determined according to one's needs.

The water-based coating composition may for example comprise the one or more non-carbonate type fillers in an amount of 1 wt.% or more, such as 3 wt.% or more, or 5 wt.% or more, or 7 wt.% or more, or 10 wt.% or more, or 12 wt.% or more, or 15 wt.% or more, based on the total weight of the composition. The water-based coating composition can comprise the one or more non-carbonate type fillers in an amount of 40 wt.% or less, such as 35 wt.% or less, or 30 wt.% or less, or 25 wt.% or less, or 20 wt.% or less, based on the total weight of the composition. The water-based coating composition can comprise the one or more non-carbonate type fillers in an amount in a range between any of the recited values such as from 1 to 30 wt.%, or from 10 wt.% to 25 wt.%, based on the total weight of the composition. The one or more non-carbonate type fillers may be used in such amount that the weight ratio of the carbonate type filler(s) to the non-carbonate type filler(s) is 2 or less, such as 1.5 or less, or 1 or less, or 0.8 or less. The weight ratio of the carbonate type filler(s) to the non-carbonate type filler(s) may for example be 0.05 or more, such as 0.1 or more, 0.2 or more, or 0.3 or more, or 0.4 or more. The weight ratio of the carbonate type filler(s) to the non-carbonate type filler(s) in the water-based coating composition may be in a range between any of the recited values such as from 0.05 to 2 or from 0.1 to 1.

The filler component, respectively the fillers comprised thereby, such as the at least one carbonate type filler and the optional one or more additional fillers as described above, can be dispersed in the aqueous carrier. The water-based coating composition may or may not comprise surfactants, wetting agents or other additives aiding in dispersing the filler component.

It has been found by the inventors that when using the filler component, which comprises the at least one carbonate type filler and optionally one or more additional fillers as described above, in suitable relative proportions to the binder component, corrosion protective coatings having a reduced tendency towards blistering and formation of other coating defects when exposed to heat, can be obtained. More specifically, according to the present disclosure the water-based coating composition may thus exhibit a filler to binder ratio on a weight basis of 1.0 or more, such as 1.2 or more, or 1.5 or more, or 2.0 or more. The filler to binder ratio on a weight basis may be 5.0 or less, such as 4.0 or less, or 3.0 or less, or 2.5 or less. The water-based coating composition may exhibit a filler to binder ratio on a weight basis in a range between any of the recited values such as from 1.0 to 5.0, from 1.2 to 3.0, from 2.0 to 4.0, or from 1.0 to 2.0. Herein, the filler component is made up of all fillers used in the water-based coating composition, including the at least one carbonate type filler and any optional additional filler, if present. The binder component is made up of all binders used in the water-based coating composition, including the at least one chlorinated resin, and any optional additional binder, if present, such as the at least one epoxy-functional resin described above. The filler to binder ratio is accordingly calculated from the accumulated weight of all fillers and the accumulated weight of all binders used in the coating composition. In cases, where the binder component comprises in addition to the at least one chlorinated resin one or more additional binder, in particular one or more epoxy-functional resin as described above, a filler to binder ratio on a weight basis of 1.0 or more, such as in a range from 1.0 to 2.0, may be sufficient to achieve good coating performance, specifically, when the binder comprises at least one epoxy-functional resin in an amount corresponding to a weight ratio of the at least one epoxy-functional resin to the at least one chlorinated resin of at least 0.1. In other cases, such as when the binder component comprises no or only low amounts of further binder such as epoxy-functional resin in addition to the at least one chlorinated resin, a higher filler to binder ratio may be desirable or necessary. The water-based coating composition then typically has a filler to binder ratio on a weight basis of 2.0 or more, such as in a range from 2.0 to 5.0, or in a range from 2.0 to 4.0.

The water-based coating composition disclosed herein further comprises at least one anti-corrosion agent. The anti-corrosion agent helps further to protect a substrate coated with a coating formed from the coating composition and/or the resulting coating against corrosion. "Anti-corrosion agent" as used herein means any substance imparting a protective effect against corrosion and includes all types of anti-corrosion agents known from the art. Examples of anti-corrosion agents include, without being limited thereto, silicate-based anti-corrosion agents such as silicates like calcium silicate (e.g. calcium ion-exchanged silica), borosilicates and/or phosphosilicates e.g. of barium, calcium and/or strontium as well as (poly)phosphate based anti-corrosion agents such as phosphates like aluminum phosphate and calcium phosphate, triphosphates such as aluminum triphosphate, hydrogenphosphates such as those of ammonia, barium, calcium and/or strontium, condensed calcium phosphate, and titanates as well as mixtures or combinations thereof. A variety of anti-corrosion agents is commercially available. The at least one anti-corrosion agent used in the coating compositions according to the present disclosure may for instance comprise a silicate-based anti-corrosion agent, a (poly)phosphate based anti-corrosion agent or a mixture or combination thereof, preferably comprising a calcium-exchanged silica.

The at least one anti-corrosion agent can be supplied in different forms, for example in liquid form, as a solid, or as a dispersion or solution. The anti-corrosion agent thus may or may not contribute to the filler component. For instance, when a solid anti-corrosion agent or pigment substantially insoluble in the aqueous carrier is used, be it in neat form or in a carrier such as in the form of a dispersion, it can form part of the filler component.

Some conventional anti-corrosion agents contain significant amounts of catalytically active metals such as Zn or Zn-containing species or certain transition metals like Fe. Such metals can catalyze the degradation of chlorinated resins at elevated temperatures such as above 60°C. As the coating compositions and resulting coatings described herein are intended to be utilized at elevated temperatures, it is preferable to use anti-corrosion agents substantially free of metals or metal-containing species capable of catalyzing a degradation of chlorinated resins. The at least one anti-corrosion agent employed in the water-based coating composition described herein may thus be substantially free or completely free of metals or metal-containing species capable of catalyzing a degradation of chlorinated resins. For instance, the anti-corrosion agent may be substantially free or completely free of Zn or Zn-containing species. As used herein, "substantially free" means that the recited species (e.g. Zn or Zn-containing species), if present in the anti-corrosion agent at all, are present as an incidental impurity. In other words, the amount of the concerned species, if present at all, does not affect the properties of the coating composition or coatings derivable therefrom. For instance, reciting that the anti-corrosion agent is substantially free of Zn or Zn-containing species can mean that the anti-corrosion agent contains less than 0.5 weight percent of Zn or Zn-containing species or, in some cases, less than 0.1 weight percent, such as less than 0.05 weight percent of Zn or Zn-containing species, based on the total weight of the anti-corrosion agent. As used herein, the term "completely free" means that the recited species are not present in the anti-corrosion agent at all. Thus, the anti-corrosion agent may for example contain no Zn or Zn-containing species.

The amount in which the at least one anticorrosive agent is used in the water-based coating composition described may vary. The at least one anticorrosive agent will generally be used in an effective amount, which can vary depending on the nature of the used anticorrosive agent and the desired level of corrosion protection imparted thereby. If too little is used, the corrosion protection may be less than desired. On the other hand, using high amounts of the anticorrosive agent is generally undesirable due to cost reasons. Often the at least one anticorrosive agent may be used in the water-based coating composition in an amount of at least 0.1 wt.%, such. as 0.2 wt.% or more, or 0.5 wt.% or more, or 1 wt. % or more, or 1.5 wt.% or more, or 2 wt.% or more, or 2.5 wt.% or more, or 3 wt.% or more, based on the total weight of the composition. The at least one anticorrosive agent may for example be used in the water-based coating composition in an amount of 10 wt.% or less, such as 8 wt.% or less, or 5 wt. % or less, based on the total weight of the composition. The at least one anticorrosive agent may be used in the water-based coating composition in a range between any of the recited values such as from 0.1 wt.% to 10 wt.%, or from 0.5 wt.% to 10 wt.%, or from 2 wt.% to 5 wt.%, based on the total weight of the composition.

The water-based coating composition as described herein may optionally further comprise one or more additives. Such additives include any types of auxiliary agents that may conventionally be used in the formulation of coating compositions. The water-based coating composition can for example comprise one or more additives selected from colorants, surfactants, emulsifiers, dispersants, defoamers, rheology modifiers, pH regulators, biocides, fungicides, light stabilizers, heat stabilizers, antioxidants, grinding aids, wetting agents, coalescing aids, processing aids, thickeners, adhesion promoters, sag resistance agents, or mixtures or combinations thereof. Such optional additives will be used according to respective needs in accordance with conventional practice and in respective effective amounts.

For instance, the coating composition can comprise one or more colorant to impart a desired color and/or appearance to the coatings derivable therefrom. Example colorants include pigments (organic or inorganic), dyes and tints, such as those used in the paint industry and/or listed in the Dry Color Manufacturers Association (DCMA), as well as special effect compositions. A colorant may include, for example, a finely divided solid powder that is insoluble, but wettable, under the conditions of use. A colorant can be organic or inorganic and can be agglomerated or non-agglomerated. Colorants can be incorporated into the coatings by use of a grind vehicle, such as an acrylic grind vehicle, the use of which will be familiar to one skilled in the art.

Example pigments and/or pigment compositions include, but are not limited to, carbazole dioxazine crude pigment, azo, monoazo, diazo, naphthol AS, salt type (flakes), benzimidazolone, isoindolinone, isoindoline and polycyclic phthalocyanine, quinacridone, perylene, perinone, diketopyrrolo pyrrole, thioindigo, anthraquinone, indanthrone, anthrapyrimidine, flavanthrone, pyranthrone, anthanthrone, dioxazine, triarylcarbonium, quinophthalone pigments, diketo pyrrolo pyrrole red ("DPPBO red"), titanium dioxide, carbon black, and mixtures thereof. The terms "pigment" and "colored filler" can be used interchangeably. As such a pigment can form part of the filler component.

Example dyes include, but are not limited to, those that are solvent and/or aqueous based such as phthalo green or blue, iron oxide, bismuth vanadate, anthraquinone, and perylene and quinacridone.

Example tints include, but are not limited to, pigments dispersed in water-based or water miscible carriers such as AQUA-CHEM 896 commercially available from Degussa, Inc., CHARISMA COLORANTS and MAXITONER INDUSTRIAL COLORANTS commercially available from Accurate Dispersions Division of Eastman Chemical, Inc.

A pH regulator can be used to adjust the pH value of the water-based coating composition. Chlorinated resins may impart an acidic pH, which can however be undesirable e.g. in terms of safety, stability of the coatings and avoiding corrosive effects by an acid coating medium. Adjusting the pH of the chlorinated resin may thus for example be beneficial for safety reasons as well to promote stability of the coating compositions or coatings derivable therefrom and/or to reduce corrosive effects on materials contacted with the coating composition or coating, such as surfaces of a metal substrate coated with the coating composition or coating. The pH value of the water-based coating composition can for instance be adjusted to be suitably in the range from 4 to 8, such as from 5 to 7. The pH of the coating composition can be adjusted by addition of one or more bases. Suitable bases include, without limitation, amines, ammonia, hydroxides or combinations of these.

The water-based coating composition may preferably be formulated such that it is substantially free or completely free of metals or metal-containing species capable of catalyzing a degradation of chlorinated resins for the reasons discussed above with respect to the anti-corrosion agent. For instance, the coating composition may be substantially free or completely free of Zn or Zn-containing species. As used herein, "substantially free" means that the recited species such as metals or metal-containing species, if present in the composition at all, are present as an incidental impurity. In other words, the amount of the concerned species, if present at all, does not affect the properties of the coating composition or coatings derivable therefrom. For instance, reciting that the coating composition is substantially free of Zn or Zn-containing species can mean that the coating composition contains less than 1 weight percent of Zn or Zn-containing species or, in some cases, less than 0.5 weight percent, or less than 0.05 wt.% of Zn or Zn-containing species, based on the total weight of the water-based coating composition. The term "completely free" means that the recited species are not present in the coating composition at all. Thus, the coating composition may for example contain no Zn or Zn-containing species.

The water-based coating composition described herein may be prepared using techniques and equipment that are commonly used for preparing water-based coating compositions. Thus, the aqueous binder, the binder component comprising the at least one chlorinated resin and any optional additional resin(s) such as an epoxy-functional resin, the filler component comprising the at least one carbonate type filler and any optional additional filler(s), the at least one anti-corrosion agent and any further additives, if used, may be combined in suitable amounts as indicated above and thoroughly mixed using a mixer, such as a high speed mixer, to form the coating composition. In one practice, the filler component, anti-corrosion agent and optional further additives, if any, such as rheology modifiers, emulsifiers, surfactants, defoamers, dispersants, and colorants are mixed with the aqueous carrier to form a mixture. This mixture may then be grinded to form a dispersion with a desired degree of fineness. The dispersion may then be letdown with a medium, such as an aqueous dispersion, comprising the binder component to form the water-based coating composition.

The resulting water-based coating composition is typically provided in the form of a dispersion. The coating compositions of the present disclosure can be obtained in a cost-efficient manner, are typically stable upon storage over extended periods of time and can be used to form coatings as described herein.

The present disclosure thus relates as previously mentioned also to a method for coating a substrate. Herein, a water-based coating composition as disclosed above is applied over at least a portion of at least one surface of a substrate to form a coating layer. The method further comprises drying of the formed coating layer.

The compositions described herein can be applied to a wide variety of substrates, for example, automotive substrates, industrial substrates, packaging substrates, housings, machine and construction parts and structures, glass and transparencies and the like. The substrates can include, or be made of, one or more metallic material, one or more non-metallic material or a combination thereof. Non-metallic substrate materials include polymeric or plastic materials, such as, for example, polyesters, polyolefins e.g. based on polypropylene and/or polyethylene, polyamides, cellulosics, polystyrene-based polymers, acrylic polymers, poly(ethylene naphthalate), EVOH, polylactic acid, other "green" polymeric substrates, poly(ethyleneterephthalate) ("PET"), polycarbonate, polycarbonate acrylobutadiene styrene ("PC/ABS"), wood, veneer, wood composite, particle board, medium density fiberboard, cement, stone, glass, paper, cardboard, textiles, leather, both synthetic and natural, and the like. Exemplary metallic substrate materials include metals, metal alloys, intermetallic compositions, metal-containing composites, as well as substrates that have been metallized, such as metal plated plastic, and combinations of these. The metal or metal alloy can comprise or be, for example, iron, steel, cold rolled steel, hot rolled steel, weathering steel, stainless steel, tin-plated steel, steel coated with zinc metal, zinc compounds, or zinc alloys, such as electrogalvanized steel, hot-dipped galvanized steel, galvanealed steel, and steel plated with zinc alloy. Aluminum and aluminum alloys, e.g. of the 2XXX, 5XXX, 6XXX, or 7XXX series, as well as clad aluminum alloys also may be used as the substrate. The substrate may also comprise titanium and/or titanium alloys. Other suitable non-ferrous metals include copper, tin and magnesium, as well as alloys thereof. The compositions described herein are particularly suitable for coating metallic substrates. The substrate accordingly typically comprises metal (in any form as indicated above for metallic substrates), preferably comprising iron or steel, such as cast iron or shot blasted steel substrates. The coating compositions disclosed herein are particularly useful for coating substrates, particularly metallic substrates, which are in use exposed to corrosive conditions and substantial thermal load such as for example temperatures as high as 100°C or more, or 150°C or more. Substantial thermal loads can for example occur at or in proximity to hot parts such as motors, drive systems or elements exposed to hot media or intense heating, including heating by sunlight. Exemplary substrates include, without limitation, parts for use in vehicles, engines, gearboxes, drive systems, machines, industrial plants, engineering, architecture, construction, heating systems, heat pump units, air conditioning units, containers, conduits, and appliances, including washers, dryers, dishwashers, and the like. As used herein, "vehicle" or variations thereof includes, but is not limited to, civilian, commercial and military aircraft, marine and/or land vehicles such as cars, motorcycles, utility vehicles and/or trucks. The metal substrate treated in accordance with the methods of the present disclosure may be in the form of, for example, a sheet of metal or a fabricated part. The water-based coating compositions can be applied on new substrates or can be used to refurbish used substrates, including previously coated substrates.

The water-based coating compositions of the present disclosure can be applied to the substrate by any of a variety of known techniques, such as spraying, spin coating, dipping, roll-coating, brushing, flow coating, curtain coating, or a combination thereof. The coating composition can be applied in a single pass or layer or in multiple passes or layers, e.g. in a wet-on-wet deposition or with intermittent flashing. The amount of the coating composition that is applied can be controlled to yield a desired film thickness, e.g. dry film thickness. For example, the water-based coating composition of the present disclosure can be applied in an amount yielding a coating layer having a dry film thickness of up to 300 µm, such as 250 µm or less, or 200 µm or less, or 150 µm or less, or 120 µm or less, or 100 µm or less. The water-based coating composition of the present'disclosure can be applied in an amount yielding a coating layer having a dry film thickness of 10 µm or more, such as 20 µm or more, or 30 µm or more, or 40 µm or more, or 50 µm or more, or 60 µm or more, or 80 µm or more. The water-based coating composition of the present disclosure can for example be applied in an amount yielding a coating layer having a dry film thickness in a range between any of the recited values such as from 10 µm to 300 µm, or from 50 µm to 200 µm, or from 60 µm to 150 µm.

The substrate as such or the at least one surface of the substrate to be coated can optionally be cleaned and/or pretreated before applying the water-based coating composition.

Cleaning may be desirable to remove grease, dirt, and other contaminants from the substrate surface. For cleaning conventional cleaning techniques and materials may be employed. At least a portion of the surface of the substrate may be cleaned by physical and/or chemical means, such as mechanically abrading the surface, exposing it to a plasma and/or cleaning/degreasing the surface with an alkaline or acidic cleaning agent. A wide variety of cleaners is commercially available and can be used. Examples of cleaners include, for example, Chemkleen^{™} 163, 177, 611L, and 490MX, and BASE Phase Non-Phos and BASE Phase #6, each of which is commercially available from PPG Industries, Inc, and dilute nitric acid solutions. The application of such cleaners may be followed and/or preceded by a water rinse, such as with tap water, distilled water, or combinations thereof.

In some cases, the substrate may be pretreated before the water-based coating composition described herein is applied. Such pretreatment often involves bringing the substrate as such or the at least one surface of the substrate to be coated into contact with a passivating composition. Thus, the pretreatment may serve to passivate the substrate surface and promote corrosion resistance, e.g. by formation of a passivating layer on the substrate surface through the pretreatment. The substrate may be cleaned and/or subjected to water rinse, as described above, before and/or after the pretreatment. Examples of suitable passivating compositions include, without being limited thereto, chromate-based passivating compositions and chromate-free passivating compositions. For environmental and health reasons, chromate-free passivating compositions are preferably used in the practice of the present disclosure. Examples of chromate-free passivating compositions include, without being limited thereto, phosphating compositions or Group IIIB and/or Group IVB metal-based pretreatment compositions.

The substrate may thus for example be pretreated using any phosphating processes and baths known in the art. The phosphating composition may for example comprise a phosphoric acid, such as orthophosphoric acid, superphosphoric acid or aqueous solutions thereof, such as a 70 to 90 percent phosphoric acid solution, based on the total weight of the phosphoric acid solution. In addition to or in lieu of such free acids, the phosphating composition may comprise metal phosphates, organophosphates, and organophosphonates. Suitable metal phosphates include, for example, zinc phosphate, iron phosphate, manganese phosphate, calcium phosphate, magnesium phosphate, cobalt phosphate, zinc-iron phosphate, zinc-manganese phosphate, zinc-calcium phosphate and mixtures or combinations thereof. Examples of phosphating processes and baths are for instance disclosed in US 5797987 A or US 2017306497 A1, which are incorporated by reference herein in their entirety.

The substrate may also be pretreated using any Group IIIB and/or Group IVB metal-based pretreatment compositions known in the art. Group IIIB and Group IVB metals refer to the elements included in such groups in the CAS Periodic Table of the Elements as shown, for example, in the Handbook of Chemistry and Physics, (56th Ed. 1975) inside cover. Typical Group IIIB and/or IVB metal for the passivating composition include zirconium, titanium, hafnium, yttrium, scandium or mixtures thereof. Zirconium- and titanium containing materials are frequently used for Group IIIB and/or Group IVB metal-based pretreatment compositions. Non-limiting examples of suitable zirconium-containing materials include fluorozirconic acids, such as hexafluorozirconic acid, alkali metal and ammonium salts thereof such as potassium hexafluorozirconate, alkali or amine salts of zirconium hexafluoride; ammonium zirconium carbonate; zirconyl nitrate; zirconium carboxylates such as zirconium acetate, zirconium oxalate, ammonium zirconium glycolate, ammonium zirconium lactate, ammonium zirconium citrate, and mixtures thereof. Hexafluorozirconic acid is a typical example. Non-limiting examples of suitable titanium-containing materials include fluorotitanic acid, alkali salts of hexafluorotitanate, amine salts of hexafluorotitanate and mixtures thereof. Examples of Group IIIB and/or Group IVB metal-based compositions and pretreatments making use thereof, which can be used in the practice of the present disclosure, are for instance disclosed in EP 1240363 B1 or US 10113070 B2, which are incorporated by reference herein in their entirety.

The water-based coating composition may be applied directly onto the optionally cleaned and/or pretreated surface of the substrate. Alternatively, one or more additional coating layers, such as a primer layer, can be applied to the substrate surface before applying the water-based coating composition.

The water-based coating compositions disclosed herein may be pigmented or clear. The coating composition can for instance be applied as a clearcoat. A clearcoat will be understood as a coating that is substantially transparent. A clearcoat can therefore have some degree of color, provided it does not make the clearcoat opaque or otherwise affect, to any significant degree, the ability to see the underlying substrate. The clearcoats of the present disclosure can be used, for example, in conjunction with a pigmented basecoat. The water-based coating composition can also be applied as a basecoat used alone or in conjunction with one or more other coatings. A basecoat is typically pigmented; that is, it will impart some sort of color and/or other visual effect to the substrate to which it is applied.

The coating compositions according to the present disclosure can be applied alone or in combination with other coating compositions, such as for forming primers, basecoats, and/or topcoats, as part of a coating system that can be deposited onto the different substrates that are described herein. Such a coating system typically comprises a number of coating layers, such as two or more. The coating compositions described above can be used in one or more of the coating layers described herein. The coating composition according to the present disclosure can be used in coating systems for forming a primer, basecoat and/or topcoat. For instance, when the water-based coatings composition is applied as a primer or basecoat, one or more coating layers formed from other coating composition(s) may be applied thereon. Such coatings often fulfill protective and/or decorative functions. Thus, the water-based coating composition disclosed herein may, for example, be combined with a topcoat. Herein, the water-based coating composition forming a base coating may be pigmented, and the topcoat may be a clearcoat being applied over at least a part of the basecoat, i.e., a color-plus-clear system. The topcoat may be based on a composition conventionally known to those skilled in the art of, for example, formulating automotive OEM coating compositions, automotive refinish coating compositions, industrial coating compositions, architectural coating compositions, coil coating compositions, and aerospace coating compositions, among others. Such compositions typically include a film-forming resin that may include, for example, an acrylic polymer, a polyester, and/or a polyurethane. The topcoat composition may be water-borne or solvent-borne.

The coating compositions according to the present disclosure may however in particular be used in a monocoat coating system. In a monocoat coating system, a single coating layer is applied over a substrate (which can be pretreated or non-pretreated, and may optionally be primed). The coating compositions disclosed herein can accordingly in particular be used as direct-to-metal (DTM) monocoats. In such cases, there may thus be no additional coating layer formed from another coating composition applied over the coating layer formed from the water-based coating composition disclosed herein.

The coating layer formed from the water-based coating composition of the present disclosure and optionally any further coating layers formed on the substrate, as described above, may be dried. "Drying" may be used herein interchangeably with "curing" and refers to transforming an as-deposited coating layer, which is typically wet and/or flowable, to a substantially dry coating layer immobilized on the substrate. As such, "curing" or "drying" may typically involve removal of water and/or organic solvents from the coating layer. "Substantially dry" can mean a moisture content of 5 wt.% or less, such as 2 wt.% or less, or 1 wt.% or less, or 0.5 wt.% or less, or 0.2 wt.% or less, or 0.1 wt.% or less of residual moisture in the coating layer, based on the total weight of the coating layer. Drying may be conducted by any drying method known in the art, for example by heating, applying a vacuum, irradiation with actinic radiation or a combination thereof. The coating layer formed from the water-based coating composition of the present disclosure and one or more of optional further coating layer(s), if present, can be dried together or in separate drying steps. Drying can for instance comprise heating The substrale willi the coaling layer(s) formed over al least a portion of at least one surface of the substrate, for example in an oven or heating cabinet. The coated substrate can for example be heated to a temperature in a range from ambient temperature (such as about 20°C) to 60°C, such as from 30°C to 60°C, or from 40°C to 60°C, or from 40°C to 50°C. The heating or drying operation can be carried out for a duration sufficient to dry the coating layer. Typically, the duration may be in a range from several minutes to several hours, such as from 5 min to 5 hours, for example from 10 min to 3 hours. The heating or drying operation can be carried out in any suitable atmosphere such as air, forced air or vacuum.

The resulting coating, which comprises the dried coating layer formed from the water-based coating composition of the present disclosure and optionally any further coating layers formed on the substrate, can have a dry film thickness of up to 500 µm, such as 400 µm or less, or 300 µm or less, or 250 µm or less, or 200 µm or less, or 150 µm or less, or 120 µm or less, or 100 µm or less. The coating can for example have a dry film thickness of 10 µm or more, such as 20 µm or more, or 30 µm or more, or 40 µm or more, or 50 µm or more, or 60 µm or more, or 80 µm or more. The coating can have a dry film thickness in a range between any of the recited values such as from 10 µm to 500 µm, or from 20 µm to 300 µm, or from 50 µm to 200 µm.

The present disclosure thus also relates to a coating formed using a water-based coating composition disclosed herein. As set forth above, the coating can comprise a monocoat or a multilayer coating. The coating may be formed according to the method described hereinbefore.

The coatings disclosed herein can exhibit various benefits and advantages. For instance, the coatings can be durable, well adherent to underlying substrates and provide effective corrosion protection. In particular, they can exhibit excellent heat resistance, being capable of withstanding also substantial thermal loads such as temperatures of 100°C or more, like 140°C or more, and/or recurring thermal cycling with rapid heating/cooling rates. Moreover, the coating thickness can be varied over a wide range without adversely affecting coating performance. For instance, the coating can have a dry film thickness as indicated above.

The water-based coating compositions and coatings described herein are therefore particularly suitable for use in protective coatings, particularly in applications requiring good heat resistance and effective protection against corrosion. The present disclosure hence also relates to the use of the water-based coating compositions and coatings disclosed herein for imparting corrosion protection to a substrate, particularly a metallic substrate. The substrate, such as the metallic substrate, may in particular be a substrate that is exposed in use to a corrosive environment and/or to temperatures of 100°C or more during service life.

The present disclosure thus also relates to coated articles comprising a substrate, such as in particular a metallic substrate, and a coating as disclosed hereinbefore formed over at least a portion of at least one surface of the substrate. The coated article can be obtained, for example, by the method of coating a substrate as disclosed hereinbefore. The coated articles can in particular comprise articles, which are in use exposed to corrosive conditions and substantial thermal loads. The coated article may for example comprise, without being limited thereto, a part for use in vehicles, aircrafts, marine applications, engines, machinery, industrial plants, architecture, construction, engineering or in heat exposed applications.

Whereas particular examples of the water-based coating composition, coatings, coated articles, and related methods and uses have been described above for purposes of illustration, it will be evident to those skilled in the art that numerous variants of the details of the present disclosure may be made without departing from what is defined in the appended claims.

Having above generally described the water-based coating composition and related subject-matter, a further understanding can be obtained by reference to the following specific examples. These examples are provided herein for purposes of illustration only, and are not intended to limit the present disclosure, which is rather to be given the full scope of the appended claims including any equivalents thereof.

### EXAMPLES

All amounts referred to throughout the examples are parts by weight, unless otherwise noted.

### Examples 1A-1E: Preparation of water-based coating compositions with varying amount of chlorinated resin (Reference Examples)

For each of Examples 1A to 1E, the ingredients listed in Table 1a were added in the respective indicated amounts to a vessel and mixed using a high speed mixer (Grenier Charvet, Labotex L600, series 525/1) equipped with a dispersing disc operated at 500-600 rpm. Herein, each ingredient was successively added into the vessel with 5 min mixing in between each pair of successively added ingredients.

**Table 1a:**

| | **Ex.1A** | **Ex.1**B | **Ex.1C** | **Ex.1D** | **Ex.1**E |
|---|---|---|---|---|---|
| | **Amount [parts by weight]** | | | | |
| Bentone LT¹ | 0.14 | 0.15 | 0.16 | 0.16 | 0.17 |
| Demineralized Water | 20.52 | 21.59 | 22.79 | 24.13 | 25.64 |
| Surfactant² | 4.00 | 4.21 | 4.44 | 4.70 | 5.00 |
| Wetting agent³ | 0.06 | 0.06 | 0.06 | 0.07 | 0.07 |
| Fungicide | 0.03 | 0.03 | 0.03 | 0.03 | 0.03 |
| Defoamer | 0.17 | 0.18 | 0.19 | 0.20 | 0.23 |
| Dispersing additive⁴ | 0.36 | 0.38 | 0.40 | 0.43 | 0.45 |
| Corrosion inhibitor5 | 0.57 | 0.60 | 0.63 | 0.67 | 0.71 |
| 2-butoxyethanol | 1.04 | 1.09 | 1.15 | 1.22 | 1.30 |
| Carbon black | 1.70 | 1.79 | 1.89 | 2.00 | 2.12 |
| Talc | 23.63 | 24.87 | 26.25 | 27.80 | 29.53 |
| Ca-exchanged silica⁶ | 3.87 | 4.07 | 4.30 | 4.55 | 4.83 |

| | | | | | |
|---|---|---|---|---|---|
| ¹: Rheological additive, supplied by Elementis specialties ²: Non-ionic EO/PO block copolymer surfactant in demineralized water (19 wt.% solids), supplied by Avecia ³: Alkyne diol-based wetting agent, supplied by Evonik Industries ⁴: Sodium polyacrylate-based dispersing additive, supplied by BYK ⁵: Mixture of sodium hexametaphosphate (15 wt.%) and demineralized water (85 wt.%), supplied by Prayon ⁶: Corrosion inhibiting pigment, supplied by SNCZ | | | | | |

Each resulting mixture was then grinded using a vertical grinder (Oliver+Battle DGI-1 series 715:416416) operated at 2,000 rpm for 30 min to thereby prepare a dispersion having a fineness of <20 µm, as determined with an Elcometer fineness gauge.

The respective dispersion prepared in this manner was then letdown by adding the ingredients as indicated in Table 1b in the noted amounts for each of Examples 1A-1E and mixing using a high speed mixer (Grenier Charvet, Labotex L600, series 525/1) equipped with a propeller operated at 500 rpm. Herein, each ingredient was successively added into the vessel, with 5 min mixing in between each pair of successively added ingredients. Table 1b also indicates the weight ratio of filler to binder for the resulting compositions of Examples 1A-1E after the letdown.

**Table 1b:**

| | **Ex.1A** | **Ex.1**B | **Ex.1C Ex.1**D | | **Ex.1**E |
|---|---|---|---|---|---|
| | **Amount [parts by weight]** | | | | |
| Permax 805⁷ | 39.98 | 36.84 | 33.33 | 29.41 | 25.00 |
| Ammonia (25%) | 0.26 | 0.27 | 0.30 | 0.31 | 0.33 |
| Bentone premix⁸ | 2.08 | 2.18 | 2.31 | 2.44 | 2.60 |
| Thickener9 | 1.60 | 1.68 | 1.77 | 1.89 | 2.00 |
| Weight ratio Filler:Binder | 1.21 | 1.38 | 1.61 | 1.93 | 2.42 |

| | | | | | |
|---|---|---|---|---|---|
| ⁷: Vinylidene chloride acrylate copolymer emulsion (-60 wt.% solids), supplied by Lubrizol ⁸: Premix prepared by dispersing 4 parts by weight of Bentone LT in 96 parts by weight of water ⁹: Mixture of 50 wt.% BR 100 P (water-soluble non-ionic polyurethane thickener from Coatex) and 50 wt.% demineralized water | | | | | |

The thus obtained coating compositions according to Examples 1A-1E were each used to coat cold rolled steel (CRS) substrates. To this end, the respective coating composition was applied by spraying using a Pistolet Devilbiss Advance HD device to an untreated Gardobond C steel test panel from Chemetall GmbH in an amount yielding a dry film thickness of about 200 µm.
After spraying application, the coated substrates were then placed in a ventilated oven for 20-30 min at 60°C for air-forced drying of the coating.

The thus obtained coated untreated CRS panels were then subjected to a heat treatment for testing of their heat resistance. To this end, the coated substrate was placed in a ventilated oven in a heating cabinet according to DIN 12880 and held at a temperature of 150°C for 1 h.

The thus heat-treated coatings were evaluated visually and assessed for blister formation. Blister formation was evaluated according to EN ISO 4628-2:2016. The first number in the scale relates to the quantity of blisters, ranging from 0 (no blisters) to 5 (high density of blisters), and the indication in brackets to the dimension of the blisters, ranging from S0 (no blisters) to S5 (large blisters). The results are summarized in Table 1c below.

**Table 1c:**

| | **Degree of blistering acc. to EN ISO 4628-2** |
|---|---|
| Ex.1A | 5(S4) |
| Ex.1B | 5(S3) |
| Ex.1C | 5(S2) |
| Ex.1D | 5(S2) |
| Ex.1E | 0(S0) |

The samples according to Examples 1A to 1D all exhibited blistering, the degree of which increased with increasing content of the chlorinated resin. In addition, the samples showed a darkening with increasing content of the chlorinated resin, indicative of a heat induced degradation in the coating material, presumably of the chlorinated resin. On the contrary, the sample according to Example 1E with a relatively low content of the chlorinated resin, corresponding to a filler to binder ratio of 2.42 showed no blistering. This indicates that blistering can be avoided at high filler to binder weight ratio ≥2.

The samples with the coatings according to Examples 1A to 1E applied on Chemetall Gardobond C panels, air forced dried for 20-30 min at 60°C as set forth above, were moreover evaluated for possible degradation of the coating after heat treatment. To this end, the coated test panels were exposed to 150°C for 1 hour in a ventilated oven in a heating cabinet according to DIN 12880. The thus heat-treated specimens were allowed to cool down to room temperature and were then stored at ambient conditions. A cross-cut adhesion test according to EN ISO 2409:2020 was performed weekly, i.e. with a 7-day interval, after the heat exposure, to determine a time until failure (reported in "weeks until failure"). Herein, "failure" was considered to have occurred when the determined adhesion rating was "5" on the scale from 0 to 5 according to EN ISO 2409:2020, wherein increasing rating values indicate increasing damage. The obtained results are summarized in Table 1d below.

**Table 1d:**

| | **weeks until failure after heat exposure** |
|---|---|
| Ex.1A | 4 weeks |
| Ex.1B | 4weeks |
| Ex.1C | 4 weeks |
| Ex.1D | 4 weeks |
| Ex.1E | 3 weeks |

As can be seen from Table 1d, all of Examples 1A-E exhibited failure within short time (3-4 weeks) after heat exposure. The substrate surface was in each case covered with rust.

### Examples 2A-2H: Preparation of water-based coating compositions with addition of varying amount of an epoxy-functional resin (Reference Examples)

The composition according to Example 1A, obtained as described above, was modified by addition of an epoxy-functional resin in varying amounts to prepare compositions according to Examples 2A-2H. To this end, an epoxy-functional resin (Ancarez AR555 from Evonik; provided as an aqueous dispersion with solid content of about 55 wt.%) was each added to a composition according to Example 1A after letdown in varying relative amounts as indicated in the following Table 2a. The composition with the post-added epoxy-functional resin was then mixed using a high speed mixer (Grenier Charvet, Labotex L600, series 525/1) equipped with a propeller at 500 rpm.

**Table 2a:**

| | **Parts by weight of added dispersion of epoxy resin** | **Parts by weight of composition acc. to Ex. 1A after letdown** | **Weight ratio epoxy resin:chlorinated resin** |
|---|---|---|---|
| Ex.2A | 1 | 99 | 0.02 |
| Ex.2B | 2 | 98 | 0.05 |
| Ex.2C | 3 | 97 | 0.07 |
| Ex.2D | 4 | 96 | 0.10 |
| Ex.2E | 5 | 95 | 0.12 |
| Ex.2F | 7 | 93 | 0.17 |
| Ex.2G | 10 | 90 | 0.25 |
| Ex.2H | 21 | 79 | 0.61 |

The thus obtained coating compositions according to Examples 2A-2H were each used to coat a 100 mm x 200 mm shot blasted steel substrate (from ACT test panels, item no. 56076).

The respective coating composition was applied by spraying using a Pistolet Devilbiss Advance HD device to the test panel to yield a coating having a linear gradient thickness ranging from 80 to 250 µm (dry film thickness). After spraying application, the coated panel was then placed in a ventilated oven for 20-30 min at 60°C for air-forced drying of the coating.

The thus obtained coated panels were then subjected to a heat treatment for testing of their heat resistance. To this end, the coated substrates were placed in a ventilated oven in a heating cabinet according to DIN 12880 and held at a temperature of 150°C for 1 h.

The heat-treated coatings were assessed for blister formation as a function of the film thickness. Blister formation was evaluated according to DIN EN ISO 4628-2:2016. Table 2b below summarizes the results in terms of observed degree of blistering up to a dry film thickness of 160 µm.

Additionally, the samples with the coatings according to Examples 2A-2H were assessed for possible degradation over time after heat treatment at 150°C for 1 hour by a weekly cross-cut adhesion test according to EN ISO 2409:2020 as described above in the context of the coatings of Examples 1A-E.

**Table 2b:**

| | **Degree of blistering acc. to EN ISO 4628-2** |
|---|---|
| Ex.2A | 4(S4) |
| Ex.2B | 4(S3) |
| Ex.2C | 4(S3) |
| Ex.2D | 3(S4) |
| Ex.2E | 2(S3) |
| Ex.2F | 0(S0) |
| Ex.2G | 0(S0) |
| Ex.2H | 0(S0) |

The results shown in Table 2b demonstrate that blistering can be reduced or even avoided by addition of the epoxy resin in the coating composition. The degree of blistering decreases with increasing relative amount of epoxy-functional resin. At suitably high weight ratios of epoxy resin:chlorinated resin, blistering can completely be avoided. However, it was observed that all of coated samples 2A-2H showed failure in the crosscut adhesion test within short time (a few weeks) after heat treatment due to a development of rust on the substrate underneath the coating layer. Moreover, it was observed that the coating composition according to Example 2H with the highest tested amount of epoxy-functional resin started to exhibit undesirable gelation after about 2 weeks of storage.

### Examples 3A-3D: Preparation of water-based coating compositions with addition of varying types and amounts of an epoxy-functional resin (Reference Examples)

Water-based coating compositions according to Examples 3A-3D were prepared as described above in the context of Examples 1A-E using the ingredients listed in Table 3a in the indicated amounts.

**Table 3a:**

| | **Ex.3A** | **Ex.3B** | **Ex.3C** | **Ex.3D** |
|---|---|---|---|---|
| | **Parts by weight** | | | |
| Bentone premix⁸ | 3.97 | 3.97 | 3.97 | 3.45 |
| Demineralized Water | 16.78 | ' 16.78 | 16.78 | 14.58 |
| Surfactant² | 4.01 | 4.01 | 4.01 | 3.49 |
| Wetting agent³ | 0.06 | 0.06 | 0.06 | 0.05 |
| Fungicide | 0.03 | 0.03 | 0.03 | 0.02 |
| Defoamer | 0.17 | 0.17 | 0.17 | 0.15 |
| Dispersing additive⁴ | 0.36 | 0.36 | 0.36 | 0.32 |
| Corrosion inhibitor5 | 0.57 | 0.57 | 0.57 | 0.49 |
| 2-butoxyethanol | 1.04 | 1.04 | 1.04 | 0.90 |
| Carbon black | 1.71 | 1.71 | 1.71 | 1.48 |
| Talc | 23.72 | 23.72 | 23.72 | 20.62 |
| Ca-exchanged silica⁶ | 3.88 | 3.88 | 3.88 | 3.38 |
| **Letdown** | | | | |
| Permax 805⁷ | 33.13 | 28.61 | 25.10 | 34.89 |
| Ancarez AR555¹⁰ | 7.03 | 11.54 | 15.06 | 13.09 |
| Ammonia (25%) | 0.26 | 0.26 | 0.26 | 0.23 |
| Bentone premix⁸ | 2.09 | 2.09 | 2.09 | 1.82 |
| Thickener⁹ | 1.20 | 1.20 | 1.20 | 1.05 |
| | | | | |
| Weight ratio Filler:Binder | 1.22 | 1.22 | 1.22 | 0.89 |
| Weight ratio Epoxy resin: Chlorinated resin | 0.21 | 0.38 | 0.60 | 0.37 |

| | | | | |
|---|---|---|---|---|
| ¹⁰: waterborne epoxy resin dispersion (-55 wt.% solids), supplied by Evonik | | | | |

Additionally, variants (designated (i)-(iv)) of the coating compositions according to Examples 3A-3D were each prepared in this manner by replacing the Ancarez AR555 with a different epoxy-functional resin as indicated in Table 3b, together with certain characteristics of the different used epoxy resins.

**Table 3b:**

| | **Examples 3A-3D** | **Examples 3A-3D Variant (i)** | **Examples 3A-3D Variant (ii)** | **Examples 3A-3D Variant (iii)** | **Examples 3A-3D Variant (iv)** |
|---|---|---|---|---|---|
| Epoxy resin | Ancarez AR555¹⁰ | Epi-rez 5003-W-55¹¹ | Epi-rez 5108-W-60¹² | Epi-rez 5054-W-65¹³ | Epi-rez 6006-W-68¹⁴ |
| Average epoxy functionality | n/a | 3 | 8 | 3 | 5.5 |
| epoxy equivalent weight [g/eq.] | 550 | approx. 200 | approx. 230 | approx. 190 | approx. 250 |

| | | | | | |
|---|---|---|---|---|---|
| ¹¹: aqueous dispersion of a polyfunctional aromatic epoxy resin, available from Hexion ¹²: waterborne dispersion of a polyfunctional Bisphenol A epoxy novolac resin, available from Hexion ¹³: waterborne dispersion of a polyfunctional epoxy phenol novolac resin, available from Hexion ¹⁴: waterborne dispersion of an epoxy-functional ortho-cresylic novolac resin, available from Hexion | | | | | |

The thus obtained coating compositions according to Examples 3A-3D and variants (i)-(iv) thereof were each used to coat a 1.00 mm x 200 mm shot blasted steel substrate (from ACT test panels, item no. 56076). To this end, the respective coating composition was applied by spraying using a Pistolet Devilbiss Advance HD device to the test panel in an amount yielding a dry film thickness of about 200 µm. After spraying application, the coated panel was then placed in a ventilated oven for 20-30 min at 60°C for air-forced drying of the coating. The thus obtained coated substrates were then subjected to a heat treatment, placing them in a ventilated oven in a heating cabinet according to DIN 12880 and holding at a temperature of 150°C for 1 h for evaluation of their heat resistance.

### Salt spray test for corrosion resistance

The heat-treated coated test panels were subjected to a neutral salt spray test according to EN ISO 9227:2017 in a salt spray cabinet for a duration of 1,000 hours. The panels subjected to salt spray testing were then analyzed for corrosion resistance in terms of adhesion, delamination, blister formation and rusting. Adhesion was determined according to EN ISO 2409:2020. Adhesion was accordingly rated on a scale from 0 to 5, wherein increasing values indicate decreasing degree of adhesion. The degree of delamination was determined according to EN ISO 4628-8:2012, determining the width of delamination (in mm) at a scribe applied to the coated tests panels. Blister formation was evaluated according to EN ISO 4628-2:2016. As set forth above, the determined degree of blistering is reported in terms of a first number relating to the quantity of blisters, ranging from 0 (no blisters) to 5 (high density of blisters), and a subsequent indication in brackets relating to the dimension of blisters, ranging from SO (no blisters) to S5 (large blisters). Rust formation was evaluated according to EN ISO 4628-3:2016 by determining the degree of rusting (on a scale ranging from 0 (no rusting) to 5 (severe rusting) of the coated test panels by comparison with pictorial standards.

### Test for heat-induced degradation

The test panels coated with the dried coatings were moreover evaluated for possible degradation over time after heat treatment. To this end, the coated test specimens were exposed to 150°C for 1 hour in a ventilated oven in a heating cabinet according to DIN 12880. The thus heat-treated specimens were allowed to cool down to room temperature and were then stored at ambient conditions. A cross-cut adhesion test according to EN ISO 2409:2020 was performed weekly, i.e. with a 7-day interval, after the heat exposure. The time until failure was thus determined and is reported in "weeks until failure". Herein, "failure" was considered to have occurred when the determined adhesion rating was "5" on the scale according to EN ISO 2409:2020.

Table 3c summarizes the results of the evaluation of the coating compositions according to Examples 3A-3D and variants (i)-(iv) thereof.

**Table 3c:**

| **Example** | **Salt spray test** | | | | **Heat-induced degradation test** |
|---|---|---|---|---|---|
| | Delamination [mm] | Degree of blistering | Crosscut adhesion rating | Degree of rust | Weeks until failure after heat treatment |
| 3A | 0 | 0(S0) | 1-2 | 0 | 3 |
| 3B | 0 | 0(S0) | 1 | 0 | 4 |
| 3C | 0 | 0(S0) | 0 | 0 | 5 |
| 3D | 0 | 5(S3) | 3 | 0 | 4 |
| 3A (i) | 0 | 0(S0) | 0 | 0 | 4 |
| 3B (i) | 0 | 0(S0) | 0 | 0 | 4 |
| 3C (i) | 0 | 3(S3) | 0 | 0 | 4 |
| 3D (i) | 0 | 5(S3) | 0 | 0 | 3 |
| 3A (ii) | 0 | 0(S0) | 0 | 0 | 3 |
| 3B (ii) | 0 | 0(S0) | 0 | 0 | 5 |
| 3C (ii) | 0 | 0(S0) | 0 | 0 | 6 |
| 3D (ii) | 0 | 2(S2) | 0 | 0 | 3 |
| 3A (iii) | 0 | 0(S0) | 1 | 0 | 6 |
| 3B (iii) | 0 | 0(S0) | 1 | 0 | 4 |
| 3C (iii) | 0 | 0(S0) | 1 | 0 | 3 |
| 3D (iii) | 0 | 5(S2) | 3 | 0 | 6 |
| 3A (iv) | 0 | 0(S0) | 0 | 0 | 3 |
| 3B (iv) | 0 | 0(S0) | 2 | 0 | 3 |
| 3C (iv) | 0 | 0(S0) | 0 | 0 | 4 |
| 3D (iv) | 0 | 2(S2) | 1-2 | 0 | 3 |

As evidenced by the results shown in Table 3c, blistering can efficiently be reduced or even avoided by addition of the epoxy-functional resin, irrespective of the used type, at a filler:binder weight ratio ≥ 1.0, without degrading adhesion or corrosion protection properties. At lower filler:binder weight ratio (<1.0) on the contrary significantly more blistering is observed. Still, all of coated samples 3A-3D, including variants (i)-(iv) thereof, failed within short time (a few weeks) after heat treatment, exposing a corroded substrate surface formed under the coating.

### Examples 4A-4E: Preparation of water-based coating compositions according to the present disclosure

Water-based coating compositions according to the present disclosure (Examples 4A-4E) were prepared as described above in the context of Examples 1A-E using the ingredients listed in Table 4a (including calcium carbonate as filler) in the indicated amounts. For comparative purposes, the composition of Example 3C, variant (ii), serving as a control not containing calcium carbonate, is also included in Table 4a.

**Table 4a:**

| | **Ex.4A** | **Ex.4B** | **Ex.4C** | **Ex.4D** | **Ex.4E** | **Comp. Ex. 3C(ii)** |
|---|---|---|---|---|---|---|
| | **Parts by weight** | | | | | |
| Bentone premix⁸ | 3.97 | 3.97 | 3.97 | 3.97 | 3.97 | 3.97 |
| Demineralized Water | 16.79 | 16.79 | 16.79 | 16.79 | 16.79 | 16.78 |
| Surfactant² | 4.01 | 4.01 | 4.01 | 4.01 | 4.01 | 4.01 |
| Wetting agent³ | 0.06 | 0.06 | 0.06 | 0.06 | 0.06 | 0.06 |
| Fungicide | 0.03 | 0.03 | 0.03 | 0.03 | 0.03 | 0.03 |
| Defoamer | 0.17 | 0.17 | 0.17 | 0.17 | 0.17 | 0.17 |
| Dispersing additive⁴ | 0.36 | 0.36 | 0.36 | 0.36 | 0.36 | 0.36 |
| Corrosion inhibitor⁵ | 0.57 | 0.57 | 0.57 | 0.57 | 0.57 | 0.57 |
| 2-butoxyethanol | 1.04 | 1.04 | 1.04 | 1.04 | 1.04 | 1.04 |
| Carbon black | 1.71 | 1.71 | 1.71 | 1.71 | 1.71 | 1.71 |
| Talc | 15.33 | 15.33 | 15.33 | 19.73 | 11.73 | 23.72 |
| CaCO₃¹⁵ | 8.40 | 8.40 | 8.40 | 4.00 | 12.00 | - |
| Ca-exchanged silica⁶ | 3.88 | 3.88 | 3.88 | 3.88 | 3.88 | 3.88 |
| **Letdown** | | | | | | |
| Permax 805⁷ | 25.00 | 30.50 | 21.00 | 25.00 | 25.00 | 25.10 |
| Epi-rez 5108-W-60¹² | 15.00 | 9.50 | 19.00 | 15.00 | 15.00 | 15.06 |
| Ammonia (25%) | 0.26 | 0.26 | 0.26 | 0.26 | 0.26 | 0.26 |
| Bentone premix⁸ | 2.09 | 2.09 | 2.09 | 2.09 | 2.09 | 2.09 |
| Thickener⁹ | 1.20 | 1.20 | 1.20 | 1.20 | 1.20 | 1.20 |
| | | | | | | |
| Weight ratio Filler:Binder | 1.22 | 1.22 | 1.22 | 1.22 | 1.22 | 1.22 |
| Weight ratio Epoxy resin: Chlorinated resin | 0.60 | 0.31 | 0.90 | 0.60 | 0.60 | 0.60 |

| | | | | | | |
|---|---|---|---|---|---|---|
| ¹⁵: Calplex 2, calcium carbonate available from Calcit d.o.o. | | | | | | |

The thus obtained coating compositions were stable upon storage over extended periods (≥ 6 months).

The coating compositions according to Examples 4A-4E were each used to coat a 100 mm x 200 mm shot blasted steel substrate (from ACT test panels, item no. 56076). To this end, the respective coating composition was applied by spraying using a Pistolet Devilbiss Advance HD device to the test panel in an amount yielding a dry film thickness of about 200 µm. After spraying application, the coated panel was then placed in a ventilated oven for 20-30 min at 60°C for air-forced drying of the coating. The thus obtained coated substrates were then subjected to a heat treatment, placing them in a ventilated oven in a heating cabinet according to DIN 12880 and holding at a temperature of 150°C for 1 h for evaluation of their heat resistance.

The heat-treated samples were evaluated by the following methods:

### Salt spray test for corrosion resistance

The heat-treated coated test panels were subjected to a neutral salt spray test according to EN ISO 9227:2017 in a salt spray cabinet for a duration of 1,000 hours and then analyzed for corrosion resistance in terms of adhesion, delamination, blister formation and rusting as described above for Examples 3A-3E.

### Humidity resistance

The heat-treated coated test panels were moreover subjected to a condensed water test in a climatic chamber according to EN ISO 6270-2-2017 for 150 h. The test panels subjected to the condensed water test were analyzed in terms of adhesion and blister formation as set forth above.

### Corrosion resistance after heat treatment

The test panels coated with the dried coatings were moreover tested for corrosion resistance after longer exposure to high temperature. To this end, the coated test panels were subjected to a temperature of 150°C for 24 h in a heat cabinet according to DIN 12880. After the heat treatment, the test panels were evaluated for adhesion and blister formation as set forth above.

### Test for heat-induced degradation

The coated test panels were moreover evaluated for heat-induced degradation and corrosion of the substrate after heat treatment. To this end, the coated test specimens, after drying of the coating as set forth above, were exposed to 150°C for 1 hour in a ventilated oven in a heating cabinet according to DIN 12880. The thus heat-treated specimens were allowed to cool down to room temperature and were then stored at ambient conditions. A cross-cut adhesion test according to EN ISO 2409:2020 was performed weekly, i.e. with a 7-day interval, after the heat exposure over a period of 6 months and the determined adhesion rating and the appearance of the substrate surface noted.

### Corrosion resistance after cyclic thermal exposure

In addition, steering gear lids made of cast iron, having a mass of 3 kg, were coated with the coating compositions of Examples 4A-4E. To this end, the respective coating composition was applied by spraying using a Pistolet Devilbiss Advance HD device to the cast iron part in an amount yielding a dry film thickness of about 160 µm. After spraying application, the coated cast iron part was then placed in a ventilated oven for 20-30 min at 60°C for air-forced drying of the coating. The thus obtained coated cast iron parts were then placed in a ventilated oven in a heating cabinet according to DIN 12880 and subjected to cyclic thermal exposure as follows: Heating from room temperature to a peak temperature of 150°C within about 55 min and then directly cooling from the peak temperature of 150°C down again to room temperature within about 45 min (repeated 5-times), followed by heating from room temperature to a peak temperature of 150°C within about 55 min and then quenching, i.e. cooling from the peak temperature of 150°C down again to room temperature within about 5 min by means of dipping the part in cold demineralized water to perform the quenching (repeated 3-times). After this cyclic thermal exposure, the coated cast iron parts were evaluated for adhesion and blister formation as set forth above. Table 4b summarizes the results of the evaluation of the coatings derived from coating compositions according to Examples 4A-4E in comparison to the control according to Example 3C, variant (ii).

**Table 4b:**

| | **Ex.4A** | **Ex.4B** | **Ex.4C** | **Ex.4D** | **Ex.4E** | **Comp. Ex. 3C(ii)** |
|---|---|---|---|---|---|---|
| after 1000 h of salt spray test | | | | | | |
| Delamination [mm] | 0 | 0 | 0 | 0 | 0 | 0 |
| Degree of blistering | 0(S0) | 0(S0) | 0(S0) | 0(S0) | 0(S0) | 0(S0) |
| Cross-cut adhesion rating | 1 | 0 | 0 | 0-1 | 0-1 | 0 |
| Degree of rust | 0 | 0 | 0 | 0 | 0 | 0 |

| after 150 h condensed water test | | | | | | |
|---|---|---|---|---|---|---|
| Cross-cut adhesion rating | 0 | 0 | 0 | 0 | 0 | n/a |
| Degree of blistering | 0(S0) | 0(S0) | 0(S0) | 0(S0) | 0(S0) | n/a |

| after heat treatment (150°C, 24 h) | | | | | | |
|---|---|---|---|---|---|---|
| Cross-cut adhesion rating | 0 | 0 | 0 | 0 | 0 | 0 |
| Degree of blistering | 0(S0) | 0(S0) | 0(S0) | 0(S0) | 0(S0) | 0(S0) |

| after cyclic thermal exposure to 150°C | | | | | | |
|---|---|---|---|---|---|---|
| Cross-cut adhesion rating | 0 | 0 | 0 | 0 | 0 | 0 |
| Degree of blistering | 0(S0) | 0(S0) | 0(S0) | 0(S0) | 0(S0) | 0(S0) |

| degradation after heat treatment (150°C, 1 h) | | | | | | |
|---|---|---|---|---|---|---|
| 6 weeks after heat treatment | No rust, good . adhesion (Gt0) | No rust, good adhesion (Gt0) | No rust, good adhesion (Gt0) | No rust, good adhesion (Gt0) | No rust, good adhesion (Gt0) | Substrate covered with rust, complete loss of adhesion (Gt5) |
| 6 months after heat treatment | No rust, good adhesion (Gt0) | No rust, good adhesion (Gt0) | No rust, good adhesion (Gt0) | No rust, good adhesion (Gt0) | No rust, good adhesion (Gt0) | Substrate covered with rust, complete loss of adhesion (Gt5) |

As can be seen from Table 4b, the coatings derived from coating compositions in accordance with the present disclosure (Examples 4A-E) yield excellent performance with good adhesion, no delamination, blister or rust formation in the various corrosion tests, and effectively retain their protective properties also after heat treatment at a temperature as high as 150°C over long time (> 6 months). On the contrary, as illustrated by Comparative Example 3C(ii), coatings derived from coating compositions, which do not have the characteristic combination of features of the present disclosure, exhibit heat-induced degradation of the coating and associated corrosive attack of the substrate surface when exposed to heat treatment at such high temperatures, leading to failure within a few weeks after heat exposure.

### Examples 5A & 5B: Use of water-based coating compositions according to the present disclosure for coating automotive steering gearboxes

Additional water-based coating compositions according to the present disclosure (Examples 5A and 5B) were prepared as described above for Example 4D, except for using 30 parts by weight of the Permax 805 resin and 10 parts by weight of the epoxy-functional resin (Example 5A), or using 13.73 parts by weight of talc and 10.00 parts by weight of calcium carbonate (Example 5B).

The coating compositions according to Examples 5A and 5B were each used to coat 50 kg heavy, cast iron steering gear boxes for the use in construction trucks. The gear boxes were pretreated with a phosphate bath and then coated with the coating composition of Example 5A or 5B, respectively, using a spray gun (Pistolet Devilbiss Advance HD). The coating was spray applied in two layers with a flashing off at 48°C for 20 min after application of each layer. Thereafter, the coated cast iron gear boxes were placed in a ventilated oven for 90 min at 60°C for air-forced drying of the coating. Resulting dry coating thickness was in the range of 100-140 µm.

The thus obtained steering gearboxes coated with a coating derived from coating compositions according to Example 5A or 5B, respectively, were used in the field. To this end, the gearboxes were mounted on construction trucks and used in the field for a total duration of six months. Every two weeks the gear boxes were assessed visually for indications of corrosion and/or delamination. After the entire test period of six months the coatings were found to be in good shape with no observed change, showing no defects or indication of corrosion or delamination.

In addition, steering gear lids made of cast iron, having a mass of 3 kg, were spray coated with the coating composition of Example 5A or the coating composition of Example 1A as a control following the procedure indicated above with respect to Examples 4A-4E. After spraying application, the coated cast iron parts were placed in a ventilated oven for'20-30 min at 60°C for air-forced drying of the coatings. The thus obtained coated cast iron parts were then placed in a ventilated oven in a heating cabinet according to DIN 12880 and subjected to cyclic thermal exposure as follows: Heating from room temperature to a peak temperature of 170°C within about 80 min, and then quenching by dipping in cold demineralized water, i.e. cooling from the peak temperature of 170°C down again to room temperature within about 5 min (repeated 5-times). After this cyclic thermal exposure, the coated cast iron parts were evaluated visually. Fig. 1A shows a photograph of the cast iron part coated with the coating composition of Example 5A after the cyclic thermal exposure. Fig. 1B shows a photograph of the cast iron part coated with the coating composition of Comparative Example 1A after the cyclic thermal exposure. As can be seen, the coating formed from the coating composition of Comparative Example 1A exhibited severe blistering after the thermal treatment. On the contrary, the coating formed from the coating composition of Example 5A did not show blistering or other visible indications of degradation, withstanding repetitive heating to peak temperatures as high as 170°C and quenching, illustrating the excellent heat resistance and thermal stability of coatings derived from coating compositions according to the present disclosure.

## Claims

1. A water-based coating composition comprising:
an aqueous carrier;
a binder component comprising at least one chlorinated resin,
a filler component comprising at least one carbonate type filler; and
at least one anti-corrosion agent,
wherein
(A) the binder component further comprises at least one epoxy-functional resin in an amount corresponding to a weight ratio of the at least one epoxy-functional resin to the at least one chlorinated resin of at least 0.1, and the composition has a filler to binder ratio on a weight basis of 1.0 or more, or
(B) the composition has a filler to binder ratio on a weight basis of 2.0 or more.

2. The water-based coating composition according to claim 1, wherein the at least one carbonate type filler comprises an inorganic compound containing one or more anions derived from carbonic acid, preferably further comprising one or more alkaline earth metals, more preferably comprising calcium carbonate.

3. The water-based coating composition according to any one of claims 1 or 2, wherein the at least one chlorinated resin comprises a polymer comprising constituting units derived from vinylidene chloride and optionally constituting units derived from one or more further ethylenically unsaturated monomers.

4. The water-based coating composition according to any one of claims 1 to 3, wherein the at least one epoxy-functional resin comprises an aromatic epoxy resin, such as an epoxy-functional phenolic resin, and/or wherein the at least one epoxy-functional resin has an average epoxy functionality of 2 or more, such as from 3 to 10, and/or has an epoxy equivalent weight in a range from 100 to 1,000 g/eq, such as from 150 to 600 g/eq.

5. The water-based coating composition according to any one of claims 1 to 4, wherein the at least one anti-corrosion agent comprises a silicate-based anti-corrosion agent, a (poly)phosphate based anti-corrosion agent or a mixture or combination thereof, preferably comprising calcium-exchanged silica.

6. The water-based coating composition according to any one of claims 1 to 5 comprising at least 50 wt.% of the at least one chlorinated resin, based on the total weight of resin solids in the water-based coating composition, and/or comprising at least 5 wt.%, such as at least 10 wt.%, of the at least one epoxy-functional resin, based on the total weight of resin solids in the water-based coating composition.

7. The water-based coating composition according to any one of claims 1 to 6, wherein the weight ratio of the at least one epoxy-functional resin to the at least one chlorinated resin is in a range from 0.2 to 1.0.

8. The water-based coating composition according to any one of claims 1 to 7 comprising the at least one carbonate type filler in an amount of at least 0.5 wt.%, such as from 1 to 20 wt.%, based on the total weight of the composition, and/or wherein the weight ratio of the at least one carbonate type filler to the at least one chlorinated resin is in a range from 0.05 to 2.0, preferably from 0.1 to 1.0.

9. The water-based coating composition according to any one of claims 1 to 8 comprising the at least one anti-corrosion agent in an amount of at least 0.5 wt.%, such as from 0.5 to 10 wt.%, based on the total weight of the composition.

10. The water-based coating composition according to any one of claims 1 to 9, wherein the filler component further comprises one or more non-carbonate type fillers, wherein the one or more non-carbonate type fillers preferably include one or more fillers selected from silica, silicates, clay, talc, glass beads or mixtures or combinations thereof, wherein the weight ratio of carbonate type filler(s) to non-carbonate type filler(s) in the coating composition is preferably 1 or less, such as in a range from 0.1 to 1.

11. The water-based coating composition according to any one of claims 1 to 10 having a filler to binder ratio on a weight basis of 4.0 or less, such as 3.0 or less, or 2.5 or less.

12. The water-based coating composition according to any one of claims 1 to 11, wherein the at least one anti-corrosion agent and/or the water-based coating composition is substantially free of metals or metal-containing species capable of catalyzing a degradation of chlorinated resins, and/or is substantially free of Zn or Zn-containing species.

13. A method for coating a substrate comprising:
applying a water-based coating composition according to any one of claims 1 to 12 to form a coating layer over at least a portion of at least one surface of the substrate; and
drying of the formed coating layer.

14. The coating method according to claim 13, wherein at least one surface of the substrate is cleaned and/or pretreated before applying the water-based coating composition, wherein the pretreating may comprise bringing the at least one surface of the substrate into contact with a passivating composition, preferably a chromate-free passivating composition, such as a phosphating composition or Group IIIB and/or Group IVB metal-based pretreatment composition.

15. The coating method according to any one of claims 13 or 14, wherein the water-based coating composition is applied directly onto the optionally cleaned and/or pretreated surface of the substrate and/or wherein the coating is a monocoat.

16. The coating method according to any one of claims 13 to 15, wherein drying of the formed coating layer is carried out at a temperature in a range from ambient temperature to 60°C.

17. The coating method according to any one of claims 13 to 16, wherein the water-based coating composition according to any one of claims 1 to 12 is applied in an amount to form a coating layer having a dry film thickness of up to 300 µm, such as in a range from 50 to 200 µm, over the at least one portion of at least one surface of the substrate.

18. A coating formed using a water-based coating composition according to any one of claims 1 to 12, for example a coating formed according to the method for coating a substrate according to any one of claims 13 to 17.

19. A coated article comprising:
a substrate; and
a coating according to claim 18 formed over at least a portion of at least one surface of the substrate.

20. The coated article according to claim 19, or the method for coating a substrate according to any one of claims 13 to 17, wherein the substrate is a metallic substrate, preferably comprising iron or steel.

21. The coated article according to any one of claims 19 or 20, wherein the coated article comprises a part for use in vehicles, aircrafts, marine applications, engines, machinery, industrial plants, architecture, construction, engineering or in heat exposed applications.

22. Use of a water-based coating composition according to any one of claims 1 to 12 or a coating according to claim 18 for imparting corrosion protection to a metallic substrate, particularly to a metallic substrate exposed to temperatures of 100°C or more during service life.

23. Use of a carbonate type filler in a chlorinated resin containing coating composition to enhance the heat resistance of a coating obtainable from the coating composition and/or to mitigate or avoid thermally induced degradation of a substrate coated with a coating obtainable from the coating composition.
